# EUROPEAN PATENT SPECIFICATION

(11) **EP 4 168 257 B1**
(45) Date of publication and mention of the grant of the patent: **13.11.2024**
(21) Application number: 21736700.2
(22) Date of filing: 16.06.2021
(51) Int. Cl.: B60C 5/14, B60C 9/00, B60C 17/00, B60C 9/08

(54) **SELF-SUPPORTING TIRE FOR VEHICLE WHEELS**
SELBSTTRAGENDER LUFTREIFEN FÜR FAHRZEUGRÄDER
PNEU AUTOPORTANT POUR DES ROUES DE VÉHICULE

(30) Priority: 17.06.2020 IT 202000014512; 23.12.2020 IT 202000032204
(43) Date of publication of application: 26.04.2023
(73) Proprietor: Pirelli Tyre S.p.A., 20126 Milano (IT)
(72) Inventor: AGRESTI, Simone, 20126 Milano (IT); HANEL, Thomas, 20126 Milano (IT); RESMINI, Emiliano, 20126 Milano (IT); GIANNINI, Luca, 20126 Milano (IT)
(74) Representative: PGA S.p.A.
(86) International application number: PCT/IB2021/055300
(87) International publication number: WO 2021/255658

(56) References cited:
- EP-A1- 1 057 663
- WO-A1-2016/174629
- WO-A1-2018/051032
- WO-A1-2019/086785
- WO-A2-2020/128943
- US-A- 3 422 873
- US-A- 3 949 798

## Description

### FIELD OF THE INVENTION

The present invention relates to a self-supporting tire for vehicle wheels, in particular a self-supporting tire comprising a sidewall reinforcement insert made of elastomeric material arranged in an axially internal position with respect to the sidewall, hereinafter a sidewall reinforcement insert, and a carcass structure comprising hybrid reinforcing cords comprising at least one monofilament textile thread and at least one multifilament textile yarn, as defined in the present description.

### PRIOR ART

In recent years, tyre manufacturers have sought to eliminate the need for a spare wheel in the vehicle, while ensuring the ability for the vehicle to continue its trip despite a significant or total pressure loss of one or more tyres.

Self-supporting tyres are tyres capable of supporting the vehicle load under a considerable or total loss of pressure, allowing the driver to travel, for a certain distance, up to reach a garage without having to stop to replace the tyre in a potentially dangerous situation.

When the inflation pressure is significantly lower than the operating pressure, or even zero ("run-flat" mode), the tyre must be capable of travelling a certain distance at a certain speed, for example 80 km at 80 km/h.

This performance, known as "EM" (Extended Mobility) performance, is required by legislation or by vehicle manufacturers to enable the manufacturer to present the tyre as suitable for flat running.

When the inflation pressure is close to the operating pressure (in this case one speaks of normal use conditions or "normal driving" mode), it is desirable that the tyre has the highest possible performance, such as, inter alia, low weight, low rolling resistance and adequate comfort.

Therefore, the structure of a self-supporting tyre must have sufficient strength to prevent the sidewall structures and the internal surfaces from sagging or bulging on themselves when the tyre is used in a deflated condition and, on the other hand, when the tyre is in normal inflation operating conditions, it must impart favourable qualities of comfort and rolling resistance.

Several techniques have been used to achieve the above support effect without compromising normal running conditions.

Thus, for example, to impart self-supporting characteristics to the tyre, i.e. the aforementioned ability to guarantee travel for short/medium distances at reduced or substantially zero inflation pressure, for example following a puncture, it is known to integrate into the sidewall structure of the tyre one or more sidewall reinforcement inserts of elastomeric material, generally having a lenticular and/or substantially semi-circular profile, in a position axially internal to each of the sidewalls and, if present, axially external with respect to the layer of air-impermeable elastomeric material.

These sidewall reinforcement inserts of elastomeric material have the purpose of adequately supporting the vehicle load when the normal inflation pressure of the tyre is reduced, for example following a puncture.

Self-supporting tires with sidewall reinforcement inserts are described, for example, in WO2009080144A1, WO02096677A1, WO02096672A2, WO2019243713A1, WO2019086785A1, EP2700513A1, EP1242256A1, US2020056014A, US5526862, JP2010215831A and JP2014019725A.

According to the prior art, it is believed that the sidewall reinforcement insert should be made of a material with a high modulus, to ensure lift and good elongation at break, mainly to allow mounting/dismounting of the tyre on the rim.

The prior art teaches to impart a high modulus to the reinforcement inserts in different ways, for example by using elastomeric compounds loaded with high amounts of reinforcement materials and/or comprising elastomers with high modulus and/or reinforced by increasing the cross-linking density, using high amounts of vulcanising agents or additional cross-linking systems.

The presence of a high modulus sidewall reinforcement insert gives the tire excessive rigidity, to the detriment of the ride comfort in normal conditions of use, and a high hysteresis, resulting in greater rolling resistance, higher fuel consumption, and higher emissions of carbon dioxide.

Patent application US2015/0239301 describes a self-supporting tire comprising a sidewall reinforcement insert and a carcass structure comprising reinforcing elements consisting of hybrid cords made by intertwining multifilament cords made of aramid with multifilament cords made of polyester, to improve the strain resistance which occurs in the shoulder areas (crown-sidewall junction) and in the proximity to the bead.

The use of this type of solution does not solve the problem of sidewall rigidity due to the presence of the sidewall reinforcement insert in a self-supporting tire, and has a limited effect on the reduction of hysteresis.

In conclusion, in the prior art it appears consolidated that a self-supporting tire requires the introduction of rather rigid sidewall reinforcement inserts in order to guarantee a good mileage in flat running conditions. However, this need appears in contrast with the need to minimise rolling resistance and to ensure sufficient ride comfort under normal conditions of use.

### SUMMARY OF THE INVENTION

In light of the prior art, the Applicant has undertaken studies to improve the performance of self-supporting tyres, in particular to further reduce rolling resistance, and therefore fuel consumption, while maintaining performance in terms of comfort and flat running conditions.

The Applicant has found that it is possible to reconcile the need to give the tire reduced rolling resistance and good comfort in normal conditions of use while ensuring the desired lift features for the minimum mileage required in flat running conditions.

The Applicant has hypothesised that it was possible to make a carcass structure that could show greater rigidity and less hysteresis to be used in a self-supporting tire comprising a less rigid sidewall reinforcement insert, in order to comply with the opposite requirements known in the art and described above.

The Applicant has therefore hypothesised to use reinforcing cords as light as possible in its self-supporting tires, and has therefore focused its attention on textile reinforcing cords.

The Applicant has observed that, with the same material and diameter, monofilament textile threads are more suitable than multifilament textile threads to resist compression stresses and to reduce the hysteresis caused by the mutual friction between textile threads and/or filaments, while multifilament textile yarns are more suitable than monofilament textile threads to resist bending stresses and adhere to the surrounding elastomeric material.

After an extensive experimentation, the Applicant has observed that a self-supporting tire comprising a carcass structure comprising at least one carcass ply comprising reinforcing elements consisting of hybrid cords comprising a monofilament textile thread at least partially embedded in a multifilament textile yarn allowed to use a sidewall reinforcement insert having a reduced dynamic shear modulus (G'), thus obtaining a reduction of hysteresis without penalizing the distance travelled in flat running conditions.

In this way, it was possible to achieve an unexpectedly improved overall result of rolling resistance under normal conditions of use and travel in flat running conditions compared to prior art self-supporting tyres characterised by more rigid, high modulus inserts.

The Applicant has also observed an improvement in driving comfort under normal conditions of use, due to a lower rigidity of the self-supporting tire sidewall compared to traditional self-supporting tires, as well as an improvement in driving performance, especially in the direction change manoeuvres performed while running, due to the greater rigidity and lightness of the carcass structure.

Therefore, a first aspect of the present invention relates to a self-supporting tire for vehicle wheels comprising
- a carcass structure comprising at least one carcass ply having opposing side edges associated with respective bead structure;
- a belt structure applied in a radially external position with respect to said carcass structure;
- a tread band applied in a radially external position with respect to said belt structure;
- a pair of sidewalls respectively applied in an axially external position on the side surfaces of said carcass structure;
- a layer of air-impermeable elastomeric material, known as a liner, extending at least in correspondence with said tread band in a radially internal position with respect to said carcass structure; and
- a pair of sidewall reinforcement inserts, respectively embedded in correspondence with said pair of sidewalls in an axially internal position with respect to said pair of sidewalls,
wherein
- said carcass ply comprises a plurality of hybrid reinforcing cords, each cords having at least two strands twisted to each other with a predetermined twisting pitch, wherein each of said at least two strands comprises:
   ∘ at least one monofilament textile thread;
   ∘ at least one multifilament textile yarn comprising a plurality of textile filaments;
   wherein, in any cross-section of the hybrid reinforcing cord, said at least one monofilament textile thread is at least partially embedded in the filaments of said at least one multifilament textile yarn, and
- at least one sidewall reinforcement insert of said pair of sidewall reinforcement inserts comprises a vulcanised elastomeric compound having a value of elastic dynamic shear modulus G' equal to or lower than 1.25 MPa measured at 70°C, 10 Hz, 9% strain according to the RPA method set forth in the present description.

According to an embodiment of the first aspect of the present invention, said vulcanized elastomeric compound is obtained by mixing and vulcanising a vulcanisable elastomeric composition comprising
- 100 phr of at least one diene elastomeric polymer,
- at least one reinforcing filler in a total amount of less than 30% by weight relative to the total weight of said vulcanisable elastomeric composition, and
- at least 0.1 phr of at least one vulcanising agent.

### DEFINITIONS

In the present description and following claims, the following definitions apply. The term "elastomeric composition" means a composition comprising at least one diene elastomeric polymer and one or more additives, which by mixing and possible heating provides an elastomeric compound suitable for use in tyres and components thereof. The components of the elastomeric composition are not generally introduced simultaneously into the mixer but typically added in sequence. In particular, the vulcanisation additives, such as the vulcanising agent and possibly the accelerant and retardant agents, are usually added in a downstream step with respect to the incorporation and processing of all the other components. In the final vulcanisable and even more so vulcanised elastomeric compound, the individual components of the elastomeric composition may be altered or no longer individually traceable as modified, completely or in part, due to the interaction with the other components, of heat and/or mechanical processing.

The term "elastomeric compound" indicates the compound obtainable by mixing and possibly heating at least one elastomeric polymer with at least one of the additives commonly used in the preparation of tyre compounds.

The term "vulcanisable elastomeric compound" indicates the elastomeric compound ready for vulcanisation, obtainable by incorporation into an elastomeric compound of all the additives, including those of vulcanisation.

The term "vulcanised elastomeric compound" means the material obtainable by vulcanisation of a vulcanisable elastomeric compound.

The term "green" indicates a material, a compound, a composition, a component or a tyre not yet vulcanised.

The term "vulcanisation" refers to the cross-linking reaction in a natural or synthetic rubber induced by a sulphur-based and/or peroxide-based vulcanising agent.

The term "vulcanising agent" indicates a product capable of transforming natural or synthetic rubber into elastic and resistant material due to the formation of a three-dimensional network of stable inter- and intra-molecular bonds. Typically, the vulcanising agent is a sulphur-based compound such as elemental sulphur, polymeric sulphur, sulphurised agents such as bis[(trialkoxysilyl)propyl]polysulphides, thiurams, dithiodimorpholines and caprolactam-disulphide. Alternatively, the vulcanising agent is a peroxide which contains an O-O bond and can generate reactive radicals by heating.

The term "vulcanisation accelerant" means a compound capable of decreasing the duration of the vulcanisation process and/or the operating temperature, such as TBBS, sulphenamides in general, thiazoles, dithiophosphates, dithiocarbamates, guanidines, as well as sulphur donors such as thiurams.

The term "vulcanisation activating agent" indicates a product capable of further facilitating the vulcanisation, making it happen in shorter times and possibly at lower temperatures. An example of activating agent is the stearic acid-zinc oxide system. In the case of peroxide vulcanising agents, an example of activator is given by polymethacrylates such as ethylene glycol dimethacrylate.

The term "vulcanisation retardant" indicates a product capable of delaying the onset of the vulcanisation reaction and/or suppressing undesired secondary reactions, for example N-(cyclohexylthio)phthalimide (CTP).

The term "vulcanisation package" is meant to indicate the vulcanising agent and one or more vulcanisation additives selected from among vulcanisation activating agents, accelerants and retardants.

The term "elastomeric polymer" or "elastomer" or "rubber" indicates a natural or synthetic polymer which, after vulcanisation, can be stretched repeatedly at room temperature to at least twice its original length and after removal of the tensile load substantially immediately returns with force to approximately its original length (according to the definitions of the ASTM D1566-11 Standard terminology relating to Rubber).

The term "diene elastomeric polymer" indicates an elastomeric polymer derived from the polymerization of one or more monomers, of which at least one is a conjugated diene.

The term "polyisoprene" refers to isoprene polymers and copolymers.

The term "polybutadiene" refers to butadiene polymers and copolymers.

The term "reinforcing filler" is meant to refer to a reinforcing material typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres, derivatives thereof and mixtures thereof.

The term "white filler" is meant to refer to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups, possibly partially derivatised.

The term "mixing step (1) or first step" indicates the step of the preparation process of the elastomeric compound in which one or more additives can be incorporated by mixing and possibly heating, except for the vulcanising agent and the vulcanisation package which are fed in step (2). The mixing step (1) is also referred to as "non-productive step". In the preparation of a compound there may be several "non-productive" mixing steps which may be indicated with 1a, 1b, etc.

The term "mixing step (2) or second step" indicates the next step of the preparation process of the elastomeric compound in which the vulcanising agent and, possibly, other additives among which those of the vulcanisation package are introduced into the elastomeric compound obtained from step (1), and mixed in the material, at controlled temperature, generally at a compound temperature lower than 120°C, so as to give the vulcanisable elastomeric compound. The mixing step (2) is also referred to as "productive step". In the preparation of a compound there may be several "productive" mixing steps which may be indicated with 2a, 2b, etc.

The term "dynamic shear modulus" or "sliding modulus" G' means the ratio between the shear stress applied to a specimen of vulcanised elastomeric compound and the resulting deformation. The details of the experimental measurement method are reported in the present description.

The term "dynamic elastic compression modulus" E' means the ratio between the uniaxial compression stress applied to a specimen of vulcanised elastomeric compound and the resulting deformation. The details of the experimental measurement method are reported in the present description.

The term "axial extension" or "thickness" (insert width) of the sidewall reinforcement insert means the maximum extension of such sidewall reinforcement insert measured perpendicular to a plane tangent to the external surface of the sidewall reinforcement insert.

The term "equatorial plane" of the tyre means a plane perpendicular to the rotation axis of the tyre and which divides the tyre into two symmetrically equal parts.

The terms "radial" and "axial" and the expressions "radially internal/external" and "axially internal/external" are used with reference to a direction perpendicular and a direction parallel to the rotation axis of the tyre, respectively.

The terms "circumferential" and "circumferentially" are used with reference to the direction of the annular extension of the tyre, i.e. to the rolling direction of the tyre, which corresponds to a direction lying on a plane coinciding with or parallel to the equatorial plane of the tyre.

The terms "cord" or "reinforcement cord" refer to an element consisting of one or more thread-like elements (hereinafter also referred to as "thread" or "yarn") incorporated in a matrix of elastomeric material. According to the cases and the specific applications, the aforementioned thread-like elements can be made of textile and/or metal material.

By "reinforcement elements oriented in a substantially circumferential direction" it is meant that they form an angle of a few degrees (for example an angle between about 0° and 6°) with respect to the equatorial plane of the tyre.

Hereinafter, the expression "thread" will be used to refer to a single elongated element in metal material or to a single elongated element consisting of a single textile filament (in which case the expression "monofilament textile thread" will also be used), while the expression "yarn" will be used to refer to an elongated element consisting of the aggregation of a plurality of textile filaments (in which case the expression "multifilament textile yarn" will also be used).

Each filament can also be referred to as a "fibre".

The yarns can have one or more "ends", where "end" means a bundle of twisted filaments. Preferably, a single end or at least two ends twisted together is provided. The textile reinforcing cords can be identified with an abbreviation which represents the textile material, the count of the fibre used and the number of ends that contribute to forming the reinforcing cord. For example, a reinforcing cord with ends in Aramid (aromatic polyamide) identified as Ar1672 indicates a cord comprising Aramid fibres with a 1670 dtex count, formed by two ends twisted together.

By "strand" it is meant the union of at least two threads or yarns to form an elongated element intended to be twisted with at least one other elongated element to form the reinforcing cord, the two strands forming the reinforcing cord being able to be equal to each other or different from each other.

The expression "hybrid reinforcing cord" is intended to indicate a reinforcing cord comprising at least one monofilament textile thread and at least one multifilament textile yarn, the thread and the yarn being able to be made of the same textile material or of different textile materials.

The expression "non-hybrid reinforcing cord" is intended to indicate a reinforcing cord comprising only monofilament textile threads or only multifilament textile threads.

The "diameter" of a reinforcing cord, or of a thread or yarn, means the diameter measured as prescribed by the BISFA E10 method (The International Bureau For The Standardization Of Man-Made Fibres, Internationally Agreed Methods For Testing Steel Tyre Cords, 1995 edition).

In the case of yarns, the "diameter" of a yarn means the diameter of an ideal circumference that circumscribes all the filaments that define the yarn.

By "left-handed" and "right-handed" it is meant the twist direction of a reinforcing cord, or its threads, or yarns, or ends, when the reinforcing cord is oriented vertically and the inclination of the various coils and/or portions of cord/thread/yarn/end connecting the various coils of the spiral defined by the cord/thread/yarn/end is observed. The twist direction is left-handed when the aforesaid coils and/or portions are inclined as in an S, while the twist direction is right-handed when the aforesaid coils and/or portions are inclined as in a Z. The left-hand twist direction is therefore also briefly indicated with "S" and the right-handed one with "Z".

By "number of twists" it is meant the number of twists applied to a reinforcing cord, or to its threads, or yarns, or ends, per unit of cord/thread/yarn/end length. The number of twists is indicated with TPI (twist per inch) and therefore indicates the number of twists in an inch of cord/thread/yarn/end. In the case of threads, yarns or ends that need to be twisted, the twist is applied before making the cord.

With expressions such as (48x48), and in general (nxn), the first number indicates the twists imparted to the yarn/end and the second number indicates the twists imparted to the reinforcing cord obtained by twisting several yarns/ends together. Such twists are expressed in twists per decimetre (dm). The possible presence of the initials "Z" and "S" next to each of the aforementioned numbers indicates the direction of the twists imparted.

By "radial carcass structure" it is meant a carcass structure comprising a plurality of reinforcing cords, each oriented along a substantially axial direction. Such reinforcing cords can be incorporated in a single carcass layer or in several carcass ply (preferably two) radially superimposed on each other.

By "crossed belt structure" it is meant a belt structure comprising a first belt layer including reinforcing cords substantially parallel to each other and inclined with respect to the equatorial plane of the tire by a predetermined angle and at least a second belt layer disposed in a radially external position with respect to the first belt layer and including reinforcing cords substantially parallel to each other but oriented, with respect to the equatorial plane of the tire, with an inclination opposite to that of the reinforcing cords of the first layer.

By "zero degree belt layer" it is meant a reinforcement layer comprising at least one reinforcing cord wound on the belt structure in a substantially circumferential winding direction.

By "thread count" of a layer it is meant the number of reinforcing cords per unit of length present in that layer. The thread count can be measured in cords/dm (number of cords per decimetre).

By "linear density" or "count" of a cord or thread/yarn it is meant the weight of the cord or thread/yarn per unit of length. Linear density can be measured in dtex (grams per 10 km of length). For the measurement of linear density we refer to flat threads/yarns, without twists applied in the test step or in the twisting step, according to the tests regulated by the BISFA. For example, reference is made to:
for aramid fibres (AR):
   - Testing methods for para-aramid fibre yarns, 2002 Edition,
   - Determination of the linear density - Chapter 6
   - Determination of the tensile properties - Chapter 7 - Test procedure - Paragraph 7.5 - with procedure with initial pre tensioning;
for lyocell fibres:
   - Determination of the linear density - Chapter 6
   - Testing methods for viscose, cupro, acetate, triacetate and lyocell filament yarns
   - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

The term "phr" (acronym of "parts per hundred of rubbers") indicates parts by weight per 100 parts by weight of the total elastomeric base. Any additives (such as any elastomeric resins or extension oils) are not considered for the calculation of the 100 parts of the total elastomeric base.

Unless otherwise indicated, all the percentages are expressed as percentages by weight.

For the purpose of the present description and of the following claims, except in the operation examples, or where otherwise indicated, all numbers expressing quantities, sums, percentages and so on must be interpreted as modified in all cases by the term "about". Furthermore, all ranges include any combination of the maximum and minimum points described and include any intermediate ranges within them, which may or may not be specifically reported herein.

### DETAILED DESCRIPTION OF THE INVENTION

The present invention can have one or more of the preferred features set out below. They can be combined as desired according to the application requirements.

The self-supporting tire for vehicle wheels according to the present invention comprises a carcass ply comprising a plurality of hybrid reinforcing cords, each cords having at least two strands twisted to each other with a predetermined twisting pitch, wherein each of said at least two strands comprises:
∘ at least one monofilament textile thread;
∘ at least one multifilament textile yarn comprising a plurality of textile filaments; wherein, in any cross-section of the hybrid reinforcing cord, said at least one monofilament textile thread is at least partially embedded in the filaments of said at least one multifilament textile yarn.

Said carcass ply comprising a plurality of hybrid reinforcing cords is particularly suitable for use in the carcass structures of the self-supporting tire of the present invention since, in combination with at least one sidewall reinforcement insert, it is sufficiently rigid to allow a high mileage (equal to up to 100 km) with a flat tire.

In some preferred embodiments, each strand comprises a single monofilament textile thread and a single multifilament textile yarn.

In other embodiments, each strand comprises more than one monofilament textile thread (for example two monofilament textile threads) and a single multifilament textile yarn.

In further embodiments, each strand comprises a single monofilament textile thread and more than one multifilament textile yarn (e.g. two multifilament textile yarns). In further embodiments, each strand comprises more than one monofilament textile thread (e.g. two monofilament textile threads) and more than one multifilament textile yarn (e.g. two multifilament textile yarns).

Preferably, each of said two strands comprises at least two ends twisted together, more preferably only two ends.

Preferably, each of said at least two ends comprises, in any cross section of the hybrid reinforcing cord, at least one monofilament textile thread.

Preferably, each of said at least two ends comprises a single monofilament textile thread.

Preferably, each of said at least two ends comprises a single multifilament textile yarn.

Preferably, in the case where each strand comprises a single monofilament textile thread, in any cross section of the hybrid reinforcing cord, at least 50% of the external surface of the monofilament textile thread is disposed between or embedded in the filaments of said at least one multifilament textile yarn. In this way, any portion of the external surface of the monofilament textile thread which, in each cross section of the hybrid cord, would be directly exposed to the surrounding elastomeric material would have an extension such as not to compromise an excellent adhesion of the hybrid reinforcing cord with the surrounding elastomeric material.

Preferably, in the case where each strand comprises more than one monofilament textile thread, in any cross section of the hybrid reinforcing cord, at least 50% of the external surface of each monofilament textile thread is disposed between, or embedded into, the filaments of the respective multifilament textile yarn. In this way, the possibility of having an external surface portion of monofilament textile yarn directly exposed to the elastomeric material is extremely reduced.

Preferably, the hybrid reinforcing cord comprises at least a portion at which, in any cross section of the hybrid reinforcing cord, said at least one monofilament textile thread is completely embedded in the filaments of said at least one multifilament textile yarn.

In all embodiments, preferably, the twisting pitch P is greater than about 1 mm, more preferably greater than about 2 mm.

Preferably, the stranding pitch P is less than about 20 mm, more preferably less than about 15 mm.

In preferred embodiments, the stranding pitch is in the range from about 1 mm to about 20 mm, more preferably from about 2 mm to about 15 mm.

Preferably, said at least one monofilament textile thread is twisted on itself with a predetermined first twisting pitch. The Applicant has observed that this expedient contributes to optimising the fatigue behaviour of the reinforcing cord.

Preferably, said first twisting pitch is the same as said predetermined stranding pitch. In this way, the incorporation of the monofilament textile yarns into the filaments of the respective multifilament textile yarns is maximised, to the full advantage of the adhesion of the reinforcing cord with the surrounding elastomeric material.

Said at least one multifilament textile yarn may or may not be twisted on itself with a predetermined second twisting pitch. When twisted on itself, preferably, the second twisting pitch is equal to said stranding pitch. This is in order to maximise the incorporation of monofilament textile yarns into the filaments of multifilament textile yarns.

In some preferred embodiments, said at least one multifilament textile yarn is substantially parallel to said at least one monofilament textile yarn.

In other preferred embodiments, the filaments of said at least one multifilament textile yarn are helically wound on said at least one monofilament textile yarn with a predetermined winding pitch.

Again in order to maximise the incorporation of the monofilament textile yarns into the filaments of the multifilament textile yarns, preferably, said winding pitch is equal to said stranding pitch.

Preferably, said at least one monofilament textile thread is made of aliphatic polyamide fibres (for example Nylon 6, Nylon 6.6, Nylon 4.6, Nylon 4.10, Nylon 10.10, Nylon 11, Nylon 12, Nylon 6.10, Nylon 6.12), polyester fibres (for example polybutylene terephthalate, polyethylene terephthalate, polyethylene isophthalate), polyaryletherketone fibres (for example polyetheretherketone), or mixtures thereof. Advantageously, said at least one monofilament textile thread is made of polyester fibres, such as, for example, polybutylene terephthalate fibres, polyethylene terephthalate fibres, polyethylene isophthalate fibres, or mixtures thereof. More preferably, the aforementioned polyester fibres are polyethylene terephthalate (PET) fibres.

Preferably, the filaments of said at least one multifilament textile yarn are made of aromatic polyamide fibres, aliphatic polyamide fibres (for example Nylon 6, Nylon 6.6, Nylon 4.6, Nylon 4.10, Nylon 10.10, Nylon 11, Nylon 12, Nylon 6.10, Nylon 6.12), polyester fibres (for example polybutylene terephthalate, polyethylene terephthalate, polyethylene isophthalate), polyketone fibres, polyvinyl alcohol fibres, cellulose fibres (for example rayon, lyocell), glass fibres, carbon fibres or mixtures thereof.

Advantageously, the filaments of said at least one multifilament textile yarn are made of aramid fibres or polyester fibres (for example polybutylene terephthalate fibres, polyethylene terephthalate fibres, polyethylene isophthalate fibres) or mixtures thereof.

More preferably, in the case where the multifilament textile yarn comprises polyester fibres, they are polyethylene terephthalate (PET) fibres.

Preferably, said at least one monofilament textile thread has a diameter greater than about 0.10 mm, more preferably greater than about 0.15 mm.

Preferably, said at least one monofilament textile thread has a diameter less than about 0.70 mm, more preferably less than about 0.50 mm.

In preferred embodiments, said at least one monofilament textile thread has a diameter in the range from about 0.10 mm to about 0.70 mm, more preferably from about 0.15 mm to about 0.50 mm.

In further preferred embodiments, said at least one monofilament textile thread has a diameter in the range from 0.20 mm and 0.40 mm, for example equal to 0.30 mm. The Applicant has found that the use of monofilament textile threads having the aforementioned diameter values contributes to satisfying in an optimal way the need to give the carcass structure both the desired structural rigidity/integrity and the desired fatigue strength.

In general, preferably, the more monofilament textile threads are contained in each strand of the hybrid reinforcing cord, the more the diameter of said monofilament textile threads is reduced.

Preferably, said at least one multifilament textile yarn has a linear density greater than about 400 dtex, more preferably greater than about 800 dtex.

Preferably, said at least one multifilament textile yarn has a linear density of less than about 4000 dtex, more preferably less than about 2500 dtex.

In preferred embodiments, said at least one multifilament textile yarn has a linear density in the range from about 400 dtex to about 4000 dtex, more preferably from about 800 dtex to about 2500 dtex.

In further preferred embodiments, said at least one multifilament textile yarn has a linear density in the range from 840 dtex to 2100 dtex, preferably from 940 dtex to 1840 dtex, for example equal to 1100 dtex.

The Applicant has observed that the use of multifilament textile yarns having the aforementioned linear density values contributes to satisfying in an optimal way the need to give the hybrid reinforcing cords used in the carcass structure both the desired breaking load and the desired elongation at low loads.

Preferably, said at least one carcass ply has a thread count greater than 70 cords/dm, more preferably greater than 75 cords/dm.

Preferably, said at least one carcass ply has a thread count of less than, or equal to, 95 cords/dm, more preferably less than, or equal to, 90 cords/dm.

In preferred embodiments, said at least one carcass ply has a thread count in the range from 70 cords/dm to 95 cords/dm, preferably from 75 cords/dm to 90 cords/dm, for example equal to 85 cords/dm.

The Applicant has observed that the provision of the aforementioned thread count values contributes to satisfying in an optimal way the need to increase as much as possible the number of hybrid reinforcing cords present in the carcass ply compatibly with the need to provide in any case a distance between cords of adjacent hybrid reinforcing cords such as to ensure the presence of a quantity of elastomeric material sufficient to ensure the desired mechanical behaviour of the carcass structure. The Applicant believes that this distance should preferably have an extension of not less than 0.10 mm, more preferably not less than 0.15 mm, for example equal to 0.20 mm.

Preferably, said at least one carcass ply has a thickness greater than 0.7 mm, more preferably greater than 0.9 mm.

Preferably, said at least one carcass ply has a thickness of less than 1.5 mm, more preferably less than 1.3 mm.

In preferred embodiments, said at least one carcass ply has a thickness in the range from 0.7 mm to 1.5 mm, preferably from 0.9 mm to 1.3 mm, for example equal to 1.1 mm.

The Applicant has observed that the provision of the aforesaid thickness values contributes to optimally satisfying the need to provide, in a radially external and internal position to the hybrid reinforcing cords provided in the carcass ply, a layer of elastomeric material sufficient to ensure the desired mechanical behaviour and the desired geometry of the carcass structure. The Applicant believes that this layer should preferably have a thickness of not less than 0.10 mm, more preferably not less than 0.15 mm, for example equal to 0.20 mm.

In some preferred embodiments, the carcass structure comprises a single carcass ply (single-ply tire). In this way, an advantageous containment of the weight of the carcass structure (and therefore of the tire) is obtained and, consequently, a considerable reduction in the rolling resistance of the tire.

In other preferred embodiments, the carcass structure comprises at least two carcass plies superimposed on each other, preferably only two carcass plies (double-ply tire).

In this case, the reinforcing cords of a first carcass ply can be substantially parallel to those of the other carcass ply or inclined with respect to those of the other carcass ply by an angle of less than 40°, preferably less than 35°.

The vulcanised elastomeric compound comprised in, or constituting, at least one sidewall reinforcement insert of the pair of sidewall reinforcement inserts of the self-supporting tire for vehicle wheels according to the present invention is preferably obtained by mixing and vulcanising a vulcanisable elastomeric composition comprising
- 100 phr of at least one diene elastomeric polymer,
- at least one reinforcing filler in a total amount of less than 30% by weight relative to the total weight of said vulcanisable elastomeric composition, and
- at least 0.1 phr of at least one vulcanising agent.

The vulcanisable elastomeric composition comprises at least 100 phr of at least one diene elastomeric polymer.

The diene elastomeric polymer may be selected from those commonly used in sulphur-vulcanisable elastomeric compositions, which are particularly suitable for producing tyres, i.e. from among solid elastomeric polymers or copolymers with an unsaturated chain having a glass transition temperature (Tg) generally lower than 20°C, preferably in the range from 40°C to -110°C.

These polymers or copolymers may be of natural origin or may be obtained by solution polymerization, emulsion polymerization or gas-phase polymerization of one or more conjugated dienes, optionally mixed with at least one comonomer selected from monoolefins, monovinylarenes and/or polar comonomers in an amount not exceeding 60% by weight.

The conjugated dienes generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof.

The monoolefins can be selected from ethylene and α-olefins generally containing from 3 to 12 carbon atoms, such as for example propylene, 1-butene, 1-pentene, 1-hexene, 1-octene or mixtures thereof.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, and mixtures thereof. Styrene is particularly preferred.

Polar comonomers that may optionally be used, can be selected, for example, from among acrylic acid and alkylacrylic acid esters, acrylonitriles, or mixtures thereof, such as, for example, methyl acrylate, ethyl acrylate, methyl methacrylate, ethyl methacrylate, acrylonitrile and mixtures thereof.

The diene elastomeric polymer may be selected, for example, from among: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof. The vulcanisable elastomeric composition may possibly comprise at least one polymer of one or more monoolefins with an olefinic comonomer or derivatives thereof. The monoolefins can be selected for example from among ethylene and α-olefins generally containing from 3 to 12 carbon atoms, such as for example propylene, 1-butene, 1-pentene, 1-hexene, 1-octene or mixtures thereof.

The following polymers are preferred: ethylene copolymers and an α-olefin, optionally with a diene; isobutene homopolymers or copolymers thereof with small amounts of a diene, which are optionally at least partially halogenated.

The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following polymers are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; and mixtures thereof.

The elastomeric polymers referred to above can optionally be functionalised along the main chain or at the ends thereof by reaction with suitable terminating agents or coupling agents. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, amines, amides, imines, carbodiimides, alkyltin halides, substituted benzophenones, alkoxysilanes, aryloxy silanes, alkylthiols, alkyldithiolsilanes, carboxyalkylthiols, carboxyalkylthiolsilanes, and thioglycols. Useful examples of terminating agents or coupling agents are known in the art and described, for example in patents EP2408626, EP2271682, EP3049447A1, EP2283046A1, EP2895515A1, EP451604, US4742124, US 4550142, WO201 5086039A1 and WO2017211876A1.

Preferably, said at least one functionalised elastomeric polymer is obtained from polybutadiene (in particular polybutadiene with a high content of 1,4-cis), styrene/1,3-butadiene copolymers, styrene/isoprene/1,3-butadiene copolymers, styrene/1,3-butadiene/acrylonitrile copolymers, and mixtures thereof.

The vulcanisable elastomeric composition can comprise two or more elastomeric polymers as defined above, in a mixture.

Preferably, the vulcanisable elastomeric composition comprises polybutadiene in an amount of less than 50 phr, more preferably less than 30 phr, even more preferably less than 20 phr. Preferably, the vulcanisable elastomeric composition does not comprise polybutadiene.

Preferably, the vulcanisable elastomeric composition comprises:
- from 70 to 100 phr of a synthetic or natural polyisoprene or mixtures thereof,
- from 0 to 30 phr of a polybutadiene.

More preferably, the vulcanisable elastomeric composition comprises:
- from 80 to 100 phr of a synthetic or natural polyisoprene or mixtures thereof,
- from 0 to 20 phr of a polybutadiene.

The vulcanisable elastomeric composition comprises at least one reinforcing filler in a total amount preferably of less than 27%, more preferably less than 25% and even more preferably less than 20% by weight with respect to the total weight of the composition.

Preferably, the reinforcing filler is present in a total amount in the range from 5% to 30% more preferably from 5% to 26% and even more preferably from 10% to 20% by weight with respect to the total weight of the composition.

Preferably, the reinforcing filler is selected from carbon black, white fillers, silicate fibres, derivatives thereof and mixtures thereof.

In one embodiment, said reinforcing filler comprises carbon black.

Preferably, the carbon black is selected from those having a surface area not smaller than 20 m²/g, preferably of about 40 - 50 m²/g (as determined by STSA - statistical thickness surface area according to ISO 18852:2005).

The carbon black may be, for example, N234, N326, N330, N375 or N550, N660 marketed by Birla Group (India) or by Cabot Corporation, preferably N550 or N660. In an embodiment, said reinforcement filler is a white filler selected from among hydroxides, oxides and hydrated oxides, salts and hydrated salts of metals, silicates fibres, derivatives thereof and mixtures thereof.

In one embodiment, said reinforcing filler can comprise silica, for example selected from pyrogenic silica, precipitated amorphous silica, wet silica (hydrated silicic acid), anhydrous silica (anhydrous silicic acid), or mixtures thereof.

The silica that can be used in the present invention can have a BET surface area (measured according to ISO standard 5794/1) in the range from 10 m²/g to 300 m²/g, preferably from 30 m²/g to 250 m²/g, more preferably from 40 to 190 m²/g.

Commercial examples of suitable silicas are Zeosil 1165 MP, Zeosil 1115 MP, Zeosil 185 GR, Efficium from Solvay, Newsil HD90 and Newsil HD200 from Wuxi, K160 and K195 from Wilmar, H160AT and H180 AT from IQE, Zeopol 8755 and 8745 from Huber, Perkasil TF100 from Grace, Hi-Sil EZ 120 G, EZ 160G, EZ 200G from PPG, Ultrasil 7000 GR and Ultrasil 9100 GR from Evonik. Another example of suitable silica is the rice husk silica described in WO2019229692A1.

In one embodiment, said reinforcing filler comprises silica mixed with carbon black. In one embodiment, said reinforcing filler comprises a modified silica.

Silica can be modified for example by reaction with silsequioxanes (as in WO2018078480A1), by reaction with pyrroles (as in WO2016050887A1) or by reaction with silanising agents, such as bis(triethoxysilylpropyl)tetrasulphide (TESPT), 3-aminopropyltriethoxysilane (APTES) 3-glycidyloxypropyltriethoxysilane triethoxy(octyl)silane, triethoxy(ethyl)silane, triethoxy-3-(2-imidazolin-1-yl)propylsilane, triethoxy-p-tolylsilane, triethoxy(1-phenylethenyl)silane, triethoxy-2-thienylsilane, 1H,1H,2H,2H-perfluorooctyltriethoxysilane, 3-(triethoxysilyl)propyl isocyanate, 1H,1H,2H,2H-perfluorodecylthriethoxysilane, isobutyltriethoxysilane, n-octadecyltriethoxysilane, (3-chloropropyl)triethoxysilane, triethoxysilane and 3-(triethoxysilyl)propionitrile.

Commercial examples of suitable silanising agents are Si69, Dynasilan AMEO and Dynasilan GLYEO from Evonik.

The modified silica may be a sulphurised silanised silica.

Sulphurised silanised silica is a silica prepared by reaction of a silica, such as fumed silica, precipitated amorphous silica, wet silica (hydrated silicic acid), anhydrous silica (anhydrous silicic acid), or mixtures thereof, or of a metal silicate, such as aluminium silicate, sodium silicate, potassium silicate, lithium silicate or mixtures thereof, with at least one sulphurised silanising agent.

The term "sulphur silanising agent" indicates an organic derivative of silicon containing mercapto, sulphide, disulphide or polysulphide groups, said derivative being capable of reacting with the OH groups of silica.

A commercial example of suitable sulphurised silanised silica is Agilon 400 silica from PPG.

In one embodiment, said reinforcing filler comprises a modified silica mixed with carbon black.

In one embodiment, said reinforcing filler comprises silicates.

In one embodiment, said silicates are lamellar silicates, such as bentonites, alloysite, laponite, saponite, vermiculite or hydrotalcite.

In one embodiment, said silicates are modified silicates analogously to what is described below for modified silicate fibres.

In one embodiment, said silicates are silicate fibres. These fibres typically have nano dimensions and have needle-like morphology.

The silicate fibres are preferably selected from sepiolite fibres, paligorskite fibres (also known as attapulgite), wollastonite fibres, imogolite fibres and mixtures thereof.

In one embodiment, said reinforcing filler comprises silicate fibres mixed with carbon black.

In one embodiment, said silicate fibres are modified silicate fibres.

In one embodiment, the modified silicate fibres can be for example fibres modified by acid treatment with partial removal of magnesium, such as those described and exemplified in patent application WO2016/174629A1.

In one embodiment, the modified silicate fibres can be for example fibres modified by deposition of amorphous silica on the surface, such as those described and exemplified in patent application WO2016/174628A1.

In one embodiment, the modified silicate fibres can be fibres organically modified by reaction, for example, with quaternary ammonium salts such as sepiolite fibres modified by reaction with talloyl benzyl dimethyl ammonium chloride marketed by Tolsa under the name Pangel B5.

In one embodiment, the modified silicate fibres can be fibres modified by reaction with a silanising agent selected for example from mono or bifunctional silanes with one or two or three hydrolysable groups such as bis-(3-triethoxysilyl-propyl)disulphide (TESPD), bis(3-triethoxysilyl-propyl)tetrasulphide (TESPT), 3-thio-octanoyl-1-propyl-triethoxysilane (NXT), Me₂Si(OEt)₂, Me₂PhSiCl, Ph₂SiCl₂.

In one embodiment, said reinforcing filler comprises modified silicate fibres mixed with carbon black.

In a preferred embodiment, said reinforcing filler comprises sepiolite fibres.

In a preferred embodiment, said reinforcing filler comprises a white filler prepared as described in WO2019/106562A1. In particular, the filler preferably comprises sepiolite and silica fibres, more preferably in the form of microbeads, hereinafter referred to as SilSep1 and SilSep2, where SilSep1 is the white filler in microbeads M2 prepared according to Example 1 of patent application WO2019106562A1, and SilSep2 is the white M6 microbead filler prepared according to Example 3 of patent application WO2019106562A1.

In a preferred embodiment, said reinforcing filler comprises carbon black, silica and SilSep1 and/or SilSep2.

In a preferred embodiment, said reinforcing filler comprises carbon black, silica and sepiolite fibres.

In a more preferred embodiment, said reinforcing filler comprises carbon black in the range from 0 to 10 phr, silica in the range from 5 to 20 phr and sepiolite fibres in the range from 5 to 20 phr.

In an even more preferred embodiment, said reinforcing filler comprises carbon black in the range from 0 to 6 phr and SilSep1 and/or SilSep2 in a total amount in the range from 10 to 20 phr.

The vulcanisable elastomeric composition may comprise 0.1 to 10 phr of a vulcanising agent.

Preferably, the vulcanisable elastomeric composition comprises at least 0.2 phr, 0.5 phr, 0.8 phr or 1 phr of at least one vulcanising agent.

Preferably, the vulcanisable elastomeric composition comprises from 0.1 to 10 phr, from 0.2 to 10 phr, from 1 to 10 phr or from 1.5 to 5 phr of at least one vulcanising agent.

The at least one vulcanising agent is preferably selected from sulphur, or alternatively, sulphurised agents (sulphur donors), such as, for example, bis[(trialkoxysilyl)propyl]polysulphides, thiurams, dithiodimorpholines and caprolactam-disulphide and mixtures thereof. Alternatively, the vulcanising agent is a peroxide which contains an O-O bond and can generate reactive radicals by heating.

Preferably, the vulcanising agent is sulphur, preferably selected from soluble sulphur (crystalline sulphur), insoluble sulphur (polymeric sulphur), (iii) oil-dispersed sulphur and mixtures thereof.

Commercial examples of vulcanising agents suitable for use in the vulcanisable elastomeric composition are Redball Superfine sulphur from International Sulfur Inc., Crystex^{™} OT 33 AS sulphur and Eastmann Crystex^{™} HS OT 20 sulphur.

In the present vulcanisable elastomeric composition, the vulcanising agent may be used together with adjuvants such as vulcanisation activators, accelerants and/or retardants known to those skilled in the art.

The vulcanisable elastomeric composition may optionally comprise at least one vulcanisation activating agent.

The vulcanisation activating agents suitable for use in the present vulcanisable elastomeric composition are zinc compounds, in particular ZnO, ZnCOs, zinc salts of saturated or unsaturated fatty acids containing from 8 to 18 carbon atoms, which are preferably formed in situ in the elastomeric composition by reaction of ZnO and of the fatty acid or mixtures thereof. For example, zinc stearate is used, preferably formed in situ in the vulcanisable elastomeric composition, by ZnO and fatty acid, or magnesium stearate, formed by MgO, or mixtures thereof.

The vulcanisation activating agents may be present in the vulcanisable elastomeric composition in amounts preferably from 0.2 phr to 15 phr, more preferably from 1 phr to 5 phr.

Preferred activating agents derive from the reaction of zinc oxide and stearic acid. An example of activator is the product Aktiplast ST marketed by Rheinchemie. The vulcanisable elastomeric composition may further comprise at least one vulcanisation accelerant.

Vulcanisation accelerants that are commonly used may be for example selected from dithiocarbamates, guanidines, thioureas, thiazoles, sulphenamides, sulphenimides, thiurams, amines, xanthates, or mixtures thereof.

Preferably, the accelerant agent is selected from mercaptobenzothiazole (MBT), N-cyclohexyl-2-benzothiazol-sulphenamide (CBS), N-tert-butyl-2-benzothiazol-sulphenamide (TBBS) and mixtures thereof.

Commercial examples of accelerants suitable for use in the present vulcanisable elastomeric composition are N-cyclohexyl-2-benzothiazyl-sulphenamide Vulkacit^{®} (CBS or CZ), and N-terbutyl 2-benzothiazil sulphenamide, Vulkacit^{®} NZ/EGC marketed by Lanxess.

Vulcanisation accelerants may be used in the present vulcanisable elastomeric composition in an amount preferably from 0.05 phr to 10 phr, preferably from 0.1 phr to 7 phr, more preferably from 0.5 phr to 5 phr.

The vulcanisable elastomeric composition may optionally comprise at least one vulcanisation retardant agent.

The vulcanisation retardant agent suitable for use in the vulcanisable elastomeric composition is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G of Lanxess.

The vulcanisation retardant agent may be present in the vulcanisable elastomeric composition in an amount preferably ranging from 0.05 phr to 2 phr.

The vulcanisable elastomeric composition can comprise one or more vulcanisation retardant agents as defined above in mixture.

Depending on the vulcanisable elastomeric composition, the man skilled in the art can adapt the composition of the vulcanisation package and the cross-linking conditions in order to impart a cross-linking degree to the vulcanised elastomeric compound commensurate with the non-exceeding of the value of elastic dynamic shear modulus G' set according to the present invention.

The vulcanisable elastomeric composition may further comprise at least 0.05 phr, preferably at least 0.1 phr or 0.5 phr or 0.7 phr, more preferably at least 1 phr or 2 phr of at least one silane coupling agent capable of interacting with the silica-based reinforcing fillers and to bind them to elastomeric polymers during vulcanisation. Preferably, the silane coupling agent is present in an amount of at least 7% by weight, more preferably at least 9% by weight with respect to the weight of white filler.

Preferably, the vulcanisable elastomeric composition comprises from 0.1 phr to 20.0 phr or from 0.5 phr to 10.0 phr, even more preferably from 1.0 phr to 5.0 phr of at least one silane coupling agent.

Preferably, said coupling agent is a silane coupling agent selected from those having at least one hydrolysable silane group which can be identified, for example, by the following general formula (III):

(R')₃Si-CₙH₂ₙ-X (III)

wherein the groups R', equal or different from each other, are selected from: alkyl, alkoxy or aryloxy groups or from halogen atoms, provided that at least one of the groups R' is an alkoxy or an aryloxy group; n is an integer of from 1 to 6; X is a group selected from: nitrose, mercapto, amino, epoxide, vinyl, imide, chloro, -(S)ₘCₙH₂ₙ-Si-(R')₃ and -S-COR', wherein m and n are integers of from 1 to 6 and the groups R' are as defined above.

Particularly preferred silane coupling agents are bis(3-triethoxysilylpropyl)tetrasulphide, 3-thio-octanoyl-1-propyl-triethoxysilane (NXT) and bis(3-triethoxysilyl-propyl)disulphide. Said coupling agents may be added as such or in mixture with an inert filler (such as carbon black) so as to facilitate their incorporation into the vulcanisable elastomeric composition.

An example of the silane coupling agent is TESPT: bis(3-triethoxysilylpropyl)tetrasulphide Si69 marketed by Evonik.

The vulcanisable elastomeric composition may further comprise one or more additional ingredients, commonly used in the field, such as for example plasticising oils, resins, antioxidant and/or antiozonating agents (anti-ageing agents), waxes, adhesives and the like.

For example, in order to further improve the workability of the compound, the vulcanisable elastomeric composition can further comprise at least one plasticising oil.

The amount of plasticiser is preferably in the range from 0.5 to 10 phr, preferably from 1 to 7 phr.

The term "plasticising oil" means a process oil derived from petroleum or a mineral oil or a vegetable oil or a synthetic oil or combinations thereof.

The plasticising oil may be a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract ), RAE (Residual Aromatic Extract) known in the industry.

The plasticising oil may be an oil of natural or synthetic origin derived from the esterification of glycerol with fatty acids, comprising glycerine triglycerides, diglycerides, monoglycerides or mixtures thereof.

Examples of suitable vegetable oils are sunflower, soybean, linseed, rapeseed, castor and cotton oil.

The plasticising oil may be a synthetic oil selected from among the alkyl or aryl esters of phthalic acid or phosphoric acid.

The vulcanisable elastomeric composition may optionally comprise at least one antioxidant agent.

The antioxidant agent is preferably selected from N-isopropyl-N'-phenyl-p-phenylenediamine (IPPD), N-(-1,3-dimethyl-butyl)-n'-phenyl-p-phenylenediamine (6PPD), N,N'-bis-(1,4-dimethyl-pentyl)-p-phenylenediamine (77PD), N,N'-bis-(1-ethyl-3-methyl-pentyl)-p-phenylenediamine (DOPD), N,N'-bis-(1,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N-cyclohexyl-p-phenylenediamine, N-phenyl-N'-1-methylheptyl-p-phenylenediamine and the like, and mixtures thereof, preferably it is N-1,3-dimethylbutyl-N-phenyl-p-phenylenediamine (6-PPD).

A commercial example of a suitable antioxidant agent is 6PPD from Solutia/Eastman or Santoflex produced by Flexsys.

The antioxidant agent may be present in the vulcanisable elastomeric composition in an overall amount preferably from 0.1 phr to 6 phr, more preferably from 0.5 phr to 4 phr.

Advantageously, according to an embodiment, the vulcanised elastomeric compound can be characterised by the following dynamic and static mechanical properties.

The vulcanised elastomeric compound has an elastic dynamic shear modulus G' preferably of less than 1.20 MPa, more preferably less than 1.10 MPa, even more preferably less than 1.05 MPa, even more preferably less than 0.95 MPa measured at 70°C, 10 Hz, 9% deformation according to the RPA method reported in the present description.

The vulcanised elastomeric compound has an elastic dynamic shear modulus G' preferably equal to or greater than 0.50 MPa, more preferably greater than 0.55 Mpa, more preferably greater than 0.60 MPa, even more preferably greater than 0.65 MPa, even more preferably greater than 0.70 MPa measured at 70°C, 10 Hz, 9% deformation according to the RPA method reported in the present description. The vulcanised elastomeric compound has a value of elastic dynamic shear modulus G' preferably ranging from 0.55 to 1.20 MPa, more preferably ranging from 0.60 to 1.10 MPa, even more preferably ranging from 0.65 to 1.05 MPa measured at 70°C, 10 Hz, 9% deformation according to the RPA method given in the present description.

The vulcanised elastomeric compound has a dynamic compression modulus value E' preferably of less than 7.50 MPa, more preferably less than 6.50 MPa, even more preferably less than 6.00 MPa measured at 23°C, 10 Hz according to the method reported in the present description.

The vulcanised elastomeric compound has a dynamic compression modulus value E' preferably higher than 2.50 MPa, more preferably higher than 3.50 MPa, even more preferably higher than 4.00 MPa measured at 23°C, 10 Hz according to the method reported in the present description.

The vulcanised elastomeric compound has a value of elastic dynamic compression modulus E' preferably ranging from 2.50 to 7.50 MPa, more preferably ranging from 3.50 to 6.50 MPa, even more preferably ranging from 4.00 to 6.00 MPa measured at 70°C, 10 Hz, 9% deformation according to the RPA method given in the present description.

The vulcanised elastomeric compound has a Tan Delta value preferably of less than 0.080, more preferably less than 0.072, even more preferably less than 0.060 measured at 70°C, 10 Hz according to the RPA method reported in the present description.

The vulcanised elastomeric compound has a Tan Delta value preferably higher than 0.030, more preferably higher than 0.035, even more preferably higher than 0.040 measured at 70°C, 10 Hz according to the RPA method reported in the present description.

The vulcanised elastomeric compound has a Tan Delta value preferably in the range from 0.030 to 0.080, more preferably from 0.035 to 0.072, even more preferably from 0.040 to 0.060 measured at 70°C, 10 Hz according to the RPA method reported in the present description.

The vulcanised elastomeric compound has an elongation at break value AR (%) preferably higher than 150%, more preferably higher than 200%, even more preferably higher than 230% measured according to the UNI 6065:2001 method. The vulcanised elastomeric compound has a tensile strength CR (%) preferably equal to or greater than 5.0 MPa, preferably equal to or greater than 7.0 MPa, more preferably equal to or greater than 8.0 MPa, measured according to the UNI 6065:2001 method.

The vulcanised elastomeric compound has a tensile strength value CR (%) preferably in the range from 6.0 to 25.0 MPa, preferably from 7.0 to 20.0 MPa, measured according to the UNI 6065:2001 method.

In the self-supporting tire of the present invention, the vulcanisable elastomeric composition described above is used to form, in whole or in part, the vulcanised elastomeric compound comprised in at least one sidewall reinforcement insert, preferably in both sidewall reinforcement inserts, of the pair of sidewall reinforcement inserts.

The sidewall reinforcement insert may be made up partially, substantially (for example more than 70% of its weight) or, preferably, completely of the aforementioned vulcanised elastomeric compound.

In a preferred embodiment, the sidewall reinforcement insert entirely consists of the aforementioned vulcanised elastomeric compound.

In one embodiment, the self-supporting tyre of the invention comprises a single pair of sidewall reinforcement inserts, arranged one on each sidewall.

In one embodiment, the self-supporting tyre of the invention comprises two pairs of sidewall reinforcement inserts, each pair arranged in a sidewall.

In one embodiment, the sidewall reinforcement insert may have a layered structure consisting of a layer of the aforementioned vulcanised elastomeric compound, an internal reinforcement layer, for example a further carcass ply, and another layer of the aforementioned vulcanised elastomeric compound, wherein the further carcass ply is folded around the axially outermost sidewall reinforcement insert.

The sidewall reinforcement insert may have different shapes and thicknesses. Typically, the sidewall reinforcement insert may have a half moon shape which gradually decreases in thickness in both terminal directions.

The sidewall reinforcement insert according to the invention may have a maximum axial extension, for example, from a minimum of 3 mm to a maximum of 14 mm, preferably from 5 to 12 mm, more preferably from 7 to 10 mm, measured perpendicular to the plane tangent to the outer surface of the sidewall reinforcement insert.

Preferably, in the self-supporting tyre of the present invention, the sidewall reinforcement inserts of the two sidewall structures have the same thickness. Preferably, in the self-supporting tyre of the present invention, the sidewall reinforcement inserts of the two sidewall structures have the same thickness and the same shape.

The sidewall reinforcement insert extends radially, for each sidewall of the tyre, from the bead portion to the shoulder portion.

In one embodiment, the sidewall reinforcement insert extends radially, for each sidewall of the tyre, from the tread end to the bead portion.

The man skilled in the art knows that typically the thickness of the sidewall reinforcement insert varies according to the type of tyre, in particular it depends on the section height of the tyre, the number of carcass layers, the stiffness of the carcass, i.e. the standard or extra load the tyre is designed for.

For example, in the case of a tire with a nominal section height of 80mm, the thickness of the sidewall reinforcement insert typically ranges from 3 to 5 mm, in the case of a tire with a nominal section height of 100 mm, the thickness of the sidewall reinforcement insert typically ranges from 5 to 7 mm while in the case of a tyre with a nominal section height of 130 mm, the thickness of the sidewall reinforcement insert typically ranges from 7 to 10 mm.

In the self-supporting tyre according to the present invention, on the most radially internal surface, further tyre components can be optionally applied, such as for example soundproofing systems, sealants or sensors.

The self-supporting tyre of the invention is suitable for four-wheeled vehicles for road use, as tyres adapted to equip medium and high powered cars for transporting people (maximum chord size from 195 mm to 245 mm).

The Applicant believes that the invention is also adapted for tyres for small cars or high-performance tyres (HP high performance - UHP ultra high performance) with maximum chord size, for example, from 145 mm to 355 mm.

These tyres are preferably mounted on rims having seating diameters equal to or larger than 13 inches, preferably not larger than 24 inches, more preferably of between 16 inches and 23 inches.

In general, the tyre according to the invention can be a tyre for passenger cars, including both automobile tyres, such as for example the high-performance tyres defined below, and tyres for light transport vehicles, for example vans, campers, pick-up, typically with total mass at full load equal to or less than 3500 kg. Therefore, tyres for heavy transport vehicles are excluded.

The tyres of the invention can also be used in vehicles other than the aforementioned cars, for example in high-performance road and sports motorcycles, i.e. motorcycles capable of reaching speeds even higher than 270 km/h. Such motorcycles are those that belong to the category typically identified with the following classifications: hypersport, supersport, sport touring, and for lower speed ratings: scooter, street enduro and custom.

The term "tyre for motorcycle wheels" means a tyre having a high curvature ratio (typically greater than 0.200), capable of reaching high angles of inclination (roll angles) of the plane of symmetry of the motorcycle with respect to the vertical plane, during cornering of the motorcycle.

The self-supporting tyre may be an HP (High Performance) or UHP (Ultra High Performance) tyre intended for equipping vehicles for the transport mainly of people, such as Sedan, Minivan, family, SUVs (Sport Utility Vehicles) and/or CUVs (Crossover Utility Vehicles), typically tyres that allow driving at high speeds.

The high and ultra-high performance tyres are in particular those which allow to reach speeds higher than at least 160 km/h, higher than 200 km/h up to over 300 km/h. Examples of such tyres are those belonging to the classes "T", "U", "H", "V", "Z", "W", "Y" according to the E.T.R.T.O. - (European Tyre and Rim Technical Organisation) standards, in particular for four-wheel high-power vehicles. Typically, the tyres belonging to these classes have a section width equal to 185 mm or greater, preferably not greater than 325 mm, more preferably of between 195 mm and 325 mm. These tyres are preferably mounted on rims having seating diameters equal to or larger than 15 inches, preferably not larger than 24 inches, more preferably of between 17 inches and 22 inches. By SUV and CUV it is meant vehicles with raised distribution, typically four-wheel drive, typically having a displacement greater than or equal to 1800 cc, more preferably of between 2000 cc and 6200 cc. Preferably, these vehicles have a mass greater than 1,400 kg, more preferably of between 1500 Kg and 3000 Kg.

The tyre of the invention can be used as a summer or winter or "all-season" (tyres usable in all seasons) tyre.

### BRIEF DESCRIPTION OF THE DRAWINGS

Further features and advantages of the tyre of the present invention will appear more clearly from the following detailed description of preferred embodiments thereof, made with reference to the accompanying drawings. In such drawings:
- Figure 1 is a schematic partial cross half-sectional view of a portion of a self-supporting tire according to an embodiment of the present invention;
- Figure 2 is a side schematic view of a segment of a first embodiment of a hybrid reinforcing cord used in the carcass structure of the tire of Figure 1;
- Figure 3 is an enlarged schematic view of a cross section of the hybrid reinforcing cord of Figure 2 embedded in a portion of the carcass structure of the tire of Figure 1, such cross section being taken on the sectional plane S-S drawn in Figure 2;
- Figure 4 is a schematic perspective view of the hybrid reinforcing cord of Figure 2 in which part of its components have been removed to show other otherwise hidden components;
- Figure 5 is a schematic perspective view of a second embodiment of the hybrid reinforcing cord of Figure 2 in which part of its components have been removed to show other otherwise hidden components;
- Figure 6 is an enlarged schematic view of a cross section of a further embodiment of a hybrid reinforcing cord usable in the carcass structure of the tire of Figure 1.

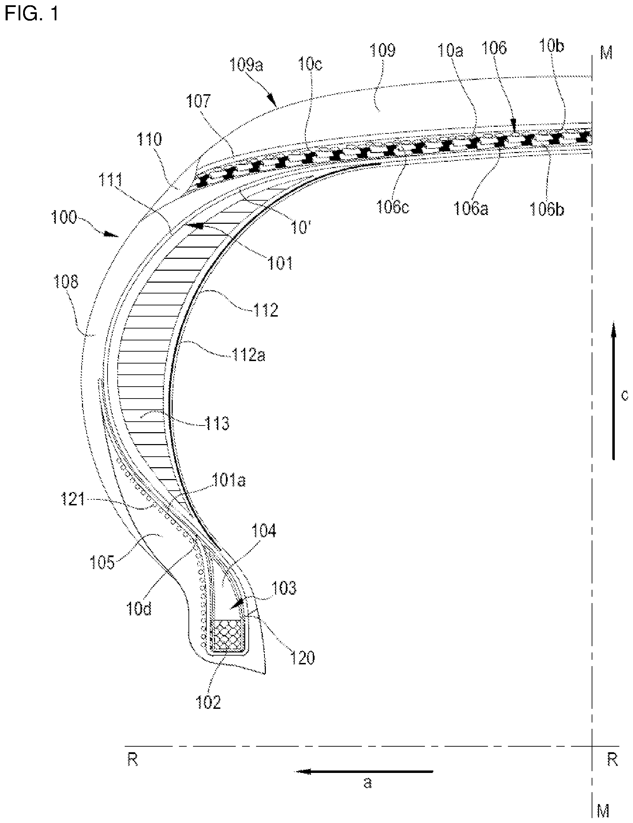

For simplicity, Figure 1 shows only a part of an exemplary embodiment of a tire 100 according to the present invention, the remaining part, which is not shown, being substantially identical and being symmetrically arranged with respect to the equatorial plane M-M of the tire.

### DESCRIPTION OF AN EMBODIMENT OF THE TYRE ACCORDING TO THE INVENTION

The tire 100 illustrated in Figure 1 is, in particular, an exemplary embodiment of a self-supporting tire for four-wheeled vehicles.

In Figure 1, "a" indicates an axial direction, "c" indicates a radial direction, "M-M" indicates the equatorial plane of the tire 100 and "R-R" indicates the rotation axis of tire 100.

The tire 100 comprises a carcass structure 101 of the radial type, comprising in turn at least one carcass ply 111.

Hereinafter, for simplicity of explanation, reference will be made to an embodiment of the tire 100 comprising a single carcass ply 111 (single-ply tire), it being however understood that what is described with reference to the carcass ply 111 also applies to each carcass ply of tyres comprising more than one carcass ply, unless otherwise indicated. In fact, embodiments of the tire 100 of the invention are contemplated in which the carcass structure 101 comprises for example two carcass plies 111 (double-ply tire).

The carcass ply 111 comprises a plurality of reinforcing cords 10' coated with, or embedded into, a layer of cross-linked elastomeric material.

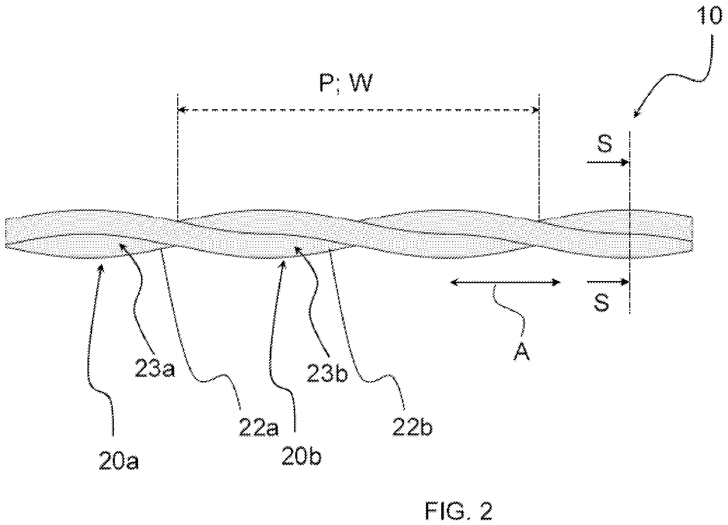

The reinforcing cords 10' of the carcass structure 101 (preferably all the reinforcing cords 10') comprise hybrid reinforcing cords 10 of the type illustrated in Figures 2-6 and described below.

In the case where the tire 100 is double ply, the reinforcing cords of a first carcass ply can be substantially parallel to those of the other carcass ply or inclined with respect to those of the other carcass ply by an angle of less than 40°.

The carcass ply 111 preferably has a thread count greater than 70 cords/dm and less than, or equal to, 95 cords/dm, more preferably in the range from 75 cords/dm to 90 cords/dm. For example, in a preferred embodiment of the tire 100 of the invention, the aforementioned thread count is equal to 85 cords/dm.

The carcass ply 111 preferably has a thickness in the range from 0.7 mm to 1.5 mm, more preferably from 0.9 mm to 1.3 mm. For example, in the aforementioned preferred embodiment of the tire 100 of the invention, the aforesaid thickness is equal to 1.1 mm.

The carcass ply 111 has axially opposite end flaps engaged with respective annular anchoring structures 102, called bead cores, possibly associated with an elastomeric filler 104. The area of the tire 100 comprising the bead core 102 and the possible elastomeric filler 104 forms an annular reinforcement structure 103 called "bead structure" and intended to allow anchoring of the tire 100 on a corresponding mounting rim, not shown.

Each annular reinforcement structure 103 is associated with the carcass structure 101 by folding backwards (or turning up) the opposite end flaps of the at least one carcass ply 111 around the bead core 102 and the possible elastomeric filler 104, so as to form the so-called flaps 101a of the carcass structure 101.

In one embodiment, the coupling between the carcass structure 101 and the annular reinforcement structure 103 can be achieved by means of a (not shown in Figure 1) applied in a radially external position with respect to the carcass ply 111.

An anti-abrasive strip 105 is arranged at each annular reinforcement structure 103 so as to enclose the annular reinforcement structure 103 along the axially internal, axially external and radially internal areas of the annular reinforcement structure 103, thus interposing between the latter and the wheel rim when the tire 100 is mounted on the rim. However, such anti-abrasive strip 105 may not be provided.

The tire 100 comprises, in a position radially external to the carcass structure 101, a crossed belt structure 106 comprising at least two belt layers 106a, 106b placed in radial overlap with respect to each other.

The belt layers 106a, 106b respectively comprise a plurality of reinforcing cords 10a, 10b. Such reinforcing cords 10a, 10b have an inclined orientation with respect to the circumferential direction of the tire 100, or to the equatorial plane M-M of the tire 100, by an angle in the range from 15° to 45°, preferably from 20° to 40°. For example, such angle is 30°.

The tyre 100 can also comprise a further belt layer (not shown) disposed between the carcass structure 101 and the radially innermost belt layer of the aforementioned belt layers 106a, 106b and comprising a plurality of reinforcing cords having an inclined orientation with respect to the circumferential direction of the tyre 100, or to the equatorial plane M-M of the tyre 100, by an angle equal to 90°.

The reinforcing cords 10a, 10b of a belt layer 106a, 106b are parallel to each other and have a cross orientation with respect to the reinforcing cords of the other belt layer 106b, 106a.

In ultra-high performance tires, the belt structure 106 may be a turned up cross belt structure. Such belt structure is made by arranging at least one belt layer on a support element and turning up the opposite lateral end flaps of said at least one belt layer. Preferably, initially a first belt layer is deposited on the support element, subsequently the support element expands radially, subsequently a second belt layer is deposited on the first belt layer and finally the opposing axial end flaps of the first belt layer are turned up on the second belt layer to at least partially cover the second belt layer, which is the radially outermost one. In some cases, a third belt layer may be placed on the second belt layer. Advantageously, the turn-up of the axially opposing end flaps of a belt layer on another belt layer radially external thereto imparts a greater reactivity and readiness of response of the tire when entering a bend.

The tire 100 comprises, in a position radially outermost to the crossed belt structure 106, at least one zero degree reinforcing layer 106c, commonly known as a "zero degree belt". It comprises reinforcing cords 10c oriented in a substantially circumferential direction. These reinforcing cords 10c therefore form an angle of a few degrees (typically less than 10°, for example ranging from 0° to 6°) with respect to the equatorial plane M-M of the tire 100.

The reinforcing cords 10a, 10b, 10c are coated with an elastomeric material or embedded in a matrix of cross-linked elastomeric material. The reinforcing cords 10a, 10b, 10c and 10d can also be hybrid reinforcing cords 10 of the type illustrated in Figures 2-6 or reinforcing cords of a different type.

In a radially external position to the zero-degree reinforcing layer 106c, a tread band 109 of elastomeric material is applied.

Respective sidewalls 108 made of elastomeric material are also applied on the lateral surfaces of the carcass structure 101, in a position axially external to the carcass structure 101 itself. Each sidewall 108 extends from one of the lateral edges of the tread band 109 to the respective annular reinforcement structure 103.

The anti-abrasive strip 105, if present, extends at least as far as the respective sidewall 108.

In some specific embodiments, such as the one illustrated and described herein, the rigidity and integrity of the annular reinforcement structure 103 and of the side 108 can be improved by providing a stiffening layer 120, generally known as a "flipper" or additional strip-like insert.

The flipper 120 is wrapped around a respective bead 102 and the elastomeric filler 104 so as to at least partially surround the annular reinforcement structure 103. In particular, the flipper 120 encloses the annular reinforcement structure 103 along the axially internal, axially external and radially internal areas of the annular reinforcement structure 103.

The flipper 120 is arranged between the turned up end flap of the carcass ply 111 and the respective annular reinforcement structure 103. Usually, the flipper 120 is in contact with the carcass ply 111 and the annular reinforcement structure 103.

In some specific embodiments, such as the one illustrated and described herein, the bead structure 103 may further comprise a further stiffening layer 121 which is generally known by the term "chafer", or protective strip, and which has the function to increase the rigidity and integrity of the annular reinforcement structure 103.

The chafer 121 is associated with a respective turned up end flap of the carcass ply 111 in an axially outermost position with respect to the respective annular reinforcement structure 103 and extends radially towards the sidewall 108 and the tread band 109.

The flipper 120 and the chafer 121 comprise reinforcing cords 10d (those of the flipper 120 are not visible in the accompanying figures) coated with an elastomeric material or embedded in a matrix of cross-linked elastomeric material.

The tread band 109 has, in a radially external position, a rolling surface 109a intended to come into contact with the ground. Circumferential grooves (not shown in Figure 1) are formed on the rolling surface 109a, which are connected by transverse notches (not shown in Figure 1) so as to define on the rolling surface 109a a plurality of blocks of various shapes and sizes (not shown in Figure 1).

An underlayer 107 is disposed between the crossed belt structure 106 and the tread band 109.

In some specific embodiments, such as the one illustrated and described herein, a strip 110 made of elastomeric material, commonly known as a "mini-sidewall", may possibly be present in the connection area between the sidewall 108 and the tread band 109. The mini-sidewall 110 is generally obtained by co-extrusion with the tread band 109 and allows an improvement of the mechanical interaction between the tread band 109 and the sidewalls 108.

Preferably, an end portion of the sidewall 108 directly covers the lateral edge of the tread band 109.

In the case of tubeless tires, such as the one illustrated and described herein, a layer of rubber 112, generally known as a "liner", is provided in a radially internal position with respect to the carcass ply 111 to provide the necessary impermeability to the inflation air of the tyre 100.

A layer of elastomeric material, underliner 112a, can also be provided in a radially external position to said liner 112, according to a preferred embodiment of the invention.

In an axially external position with respect to the liner 112 and the underliner 112a and axially internal to the sidewall 108 there is a sidewall reinforcement insert made of elastomeric material 113 comprising a vulcanised elastomeric compound according to the invention intended to prevent sagging or swelling of the sidewall 108 when the tire is flat.

The liner 112 and the underliner 112a can extend throughout the internal structure of the tire from bead to bead, as illustrated in Figure 1, or they can extend only at the crown structure of the tread, in the case in which the sidewall reinforcement insert 113 imparts the necessary impermeability to the inflation air of the tire 100. With reference to Figures 2-4, the hybrid reinforcing cord 10 comprises two strands 20a, 20b twisted to each other with a predetermined twisting pitch P. Preferably, the two strands 20a, 20b are identical.

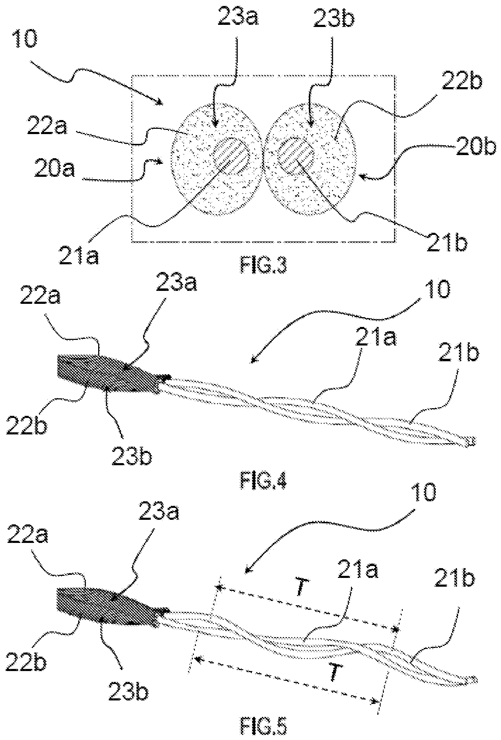

As illustrated in Figures 3 and 4, each strand 20a, 20b comprises a single monofilament textile thread 21a, 21b and a single multifilament textile yarn 22a, 22b defined by a plurality of filaments 23a, 23b. Each strand 20a, 20b could however comprise more than one monofilament textile thread and more than one multifilament textile yarn.

In any cross section of the reinforcing cord 10, the monofilament textile thread 21a, 21b is embedded in the filaments 23a, 23b of the multifilament textile yarn 22a, 22b of the respective strand 20a, 20b.

In the embodiment illustrated in Figures 3 and 4, the monofilament textile thread 21a, 21b is, in any cross section of the reinforcing cord 10, completely embedded in the filaments 23a, 23b of the multifilament textile yarn 22a, 22b of the respective strand 20a, 20b and, therefore, the aforesaid filaments 23a, 23b are arranged around the respective monofilament textile thread 21a, 21b so as to completely enclose the monofilament textile thread 21a, 21b.

Therefore, in Figure 2, the monofilament textile threads 21a, 21b are not visible as they are entirely covered by the filaments 23a, 23b of the multifilament textile yarn 22a, 22b of the respective strand 20a, 20b.

Although the embodiment of Figures 2-4 (and as will be seen later also that of Figure 5) in which the monofilament textile thread 21a, 21b is, in any cross section of the reinforcing cord 10, completely embedded in the filaments 23a, 23b of the multifilament textile yarn 22a, 22b of the respective strand 20a, 20b is particularly preferred, also preferred are embodiments in which, in any cross section of the reinforcing cord 10, the monofilament textile thread 21a, 21b is only partially embedded in the filaments 23a, 23b of the multifilament textile yarn 22a, 22b of the respective strand 20a, 20b, and in particular those in which at least 50% of the external surface of the monofilament textile thread 21a, 21b is embedded in the filaments 23a, 23b of the multifilament textile yarn 22a, 22b of the respective strand 20a, 20b.

The monofilament textile threads 21a, 21b extend along a longitudinal direction A, illustrated in Figure 2.

The mutual arrangement of the monofilament textile threads 21a, 21b and of the filaments 23a, 23b of the multifilament textile yarn 22a, 22b along the longitudinal direction A can be such that the monofilament textile threads 21a, 21b extend substantially parallel to the filaments 23a, 23b of the multifilament textile yarn 22a, 22b of the respective strand 20a, 20b, as illustrated in Figure 4, or such that the filaments 23a, 23b of the multifilament textile yarn 22a, 22b are helically wound on the respective monofilament textile thread 21a, 21b with a predetermined winding pitch W which, preferably, is equal to the twisting pitch P.

In the latter case, the direction of the twisting of the two strands 20a, 20b is preferably the same as that of the winding of the filaments 23a, 23b of the multifilament textile yarn 22a, 22b on the monofilament textile thread 21a, 21b, but it is possible to provide opposite directions.

The twisting pitch P is preferably in the range from 1 mm to 20 mm, more preferably from 2 mm to 15 mm, for example equal to 12.5 mm.

Figure 5 illustrates an embodiment of a hybrid reinforcing cord 10 which differs from that illustrated in Figures 2-4 only in that the monofilament textile threads 21a, 21b are twisted on themselves with a predetermined torsion pitch T.

Preferably, the torsion pitch T is equal to the twisting pitch P.

The direction of the torsion of the monofilament textile threads 21a, 21b can be the same or opposite to that of the twisting of the two strands 20a, 20b.

The monofilament textile threads 21a, 21b are made of polyester fibres, for example polybutylene terephthalate (PBT), polyethylene terephthalate (PET), polyethylene isophthalate (PEI), or mixtures thereof.

The filaments 23a, 23b of each multifilament textile yarn 22a, 22b are made of aramid fibres or polyester fibres, for example polybutylene terephthalate (PBT), polyethylene terephthalate (PET), polyethylene isophthalate (PEI), or rayon fibres, or in any mixture of the aforesaid fibres.

Irrespective of the specific type of textile material used for the filaments 23a, 23b of the multifilament textile yarns 22a, 22b, such material is suitably adhered to the surface so as to provide adequate adhesion to the surrounding elastomeric material. Typically, the adhesion can be accomplished by coating with an adhesive substance or by a chemical or physical treatment.

For example, the adhesion is performed by immersion of the hybrid reinforcing cord 10 in a solution comprising the adhesive substance after having twisted the two strands 20a, 20b together.

The monofilament textile threads 21a, 21b preferably have a diameter in the range from 0.15 mm to 0.50 mm, more preferably from 0.20 mm to 0.40 mm. For example, in a preferred embodiment of the carcass structure 101 of the tire 100, the aforementioned diameter is equal to 0.30 mm.

The multifilament textile yarns 22a, 22b preferably have a linear density in the range from 840 dtex to 2100 dtex, preferably from 940 dtex to 1840 dtex. For example, in a preferred embodiment of the carcass structure 101 of the tire 100, the aforesaid linear density is equal to 1100 dtex.

In a preferred embodiment of the hybrid reinforcing cord 10 illustrated in Figures 2-5 and used in the above preferred embodiment of the carcass structure 101 of the tire 100, the hybrid reinforcing cord 10 has two strands 20a, 20b stranded together. In each strand 20a, 20b, the monofilament textile threads 21a, 21b are made of PET fibres and have a diameter of 0.30 mm, while the multifilament textile yarns 22a, 22b are made of aramid and have a linear density equal to 1110 dtex. In such hybrid reinforcing cord 10, for example, the multifilament textile yarn 22a, 22b and the monofilament textile thread 21a, 21b of each of the two strands 20a, 20b were imparted 310 twists in the right-hand direction (Z), while each of the two strands 20a, 20b were imparted 180 twists in a left-hand direction (S). Such a reinforcing cord can therefore be indicated with (PET0.30+AR1100)×2 310Z/180S.

Another preferred embodiment of the hybrid reinforcing cord 10 illustrated in Figures 2-5 differs from the one described above only in that the multifilament textile yarns 22a, 22b are made of rayon and have a linear density equal to 1840 dtex. In such hybrid reinforcing cord 10, for example, the multifilament textile yarn 22a, 22b and the monofilament textile thread 21a, 21b of each of the two strands 20a, 20b were imparted 300 or 310 twists in the right-hand direction (Z), while each of the two strands 20a, 20b were imparted 180 twists in a left-hand direction (S). Such reinforcing cords can therefore be indicated with (PET0.30+RY1840)×2 300Z/180S and (PET0.30+RY1840)×2 310Z/180S, respectively.

Another preferred embodiment of the hybrid reinforcing cord 10 illustrated in Figures 2-5 differs from the one described above in that the multifilament textile yarns 22a, 22b made of rayon have a linear density equal to 1220 dtex. In such hybrid reinforcing cord 10, for example, the multifilament textile yarn 22a, 22b and the monofilament textile thread 21a, 21b of each of the two strands 20, 20b were imparted 300 twists in the right-hand direction (Z), while each of the two strands 20a, 20b were imparted 150 twists in a left-hand direction (S). Such a reinforcing cord can therefore be indicated with (PET0.30+RY1220)×2 300Z/150S.

In another preferred embodiment of the hybrid reinforcing cord 10 illustrated in Figures 2-5, the two strands 20a, 20b are not identical. For example, while in both strands 20a, 20b the monofilament textile threads 21a, 21b are made of PET fibres and have a diameter of 0.30 mm, the multifilament textile yarn 22a of a strand 20a is made of rayon and has a linear density equal to 1220 dtex and the multifilament textile yarn 22b of the other strand 20b is made of rayon and has a linear density equal to 1840 dtex. In such hybrid reinforcing cord 10, for example, the multifilament textile yarn 22a, 22b and the monofilament textile thread 21a, 21b of each of the two strands 20a and 20b were imparted 300 twists in the right-hand direction (Z), while each of the two strands 20a, 20b were imparted 150 twists in a left-hand direction (S). Such a reinforcing cord can therefore be indicated with (PET0.30+RY1220) + (PET0.30+RY1840) 300Z/150S.

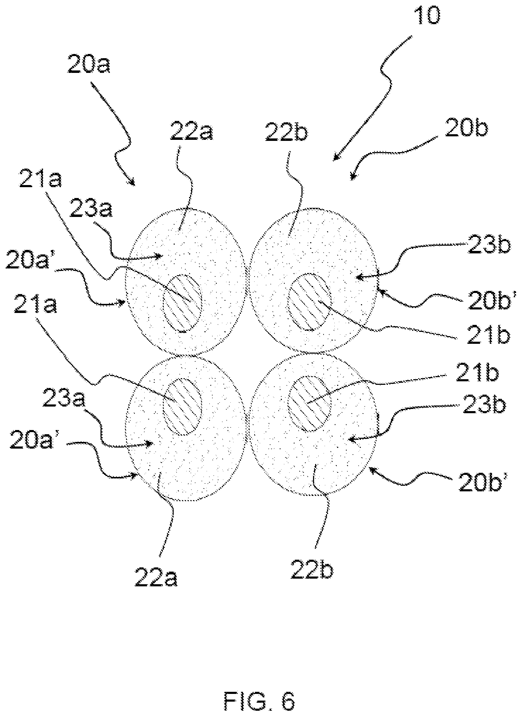

The Applicant has also made hybrid reinforcing cords according to the present invention by twisting three strands together. For example, an embodiment of this type of hybrid reinforcing cord provides that each strand comprises a monofilament textile thread made of PET fibres and having a diameter of 0.30 mm and a multifilament textile yarn made of rayon and having a linear density equal, for example, to 1220 dtex. In such hybrid reinforcing cords, for example, the multifilament textile yarn and the monofilament textile thread of each of the three strands were imparted 300 twists in the right-hand direction (Z), while each of the three strands were imparted 150 twists in a left-hand direction (S). Such a reinforcing cord can therefore be indicated with (PET0.30+RY1220)×3 300Z/150S. Figure 6 shows another preferred embodiment of a hybrid reinforcing cord 10 usable in the carcass structure 101 of tires 100 according to the present invention, preferably of the self-supporting type.

The hybrid reinforcing cord 10 of Figure 6 differs from that illustrated in Figures 2-4 only in that the strand 20a comprises two monofilament textile threads 21a of the type described above and two multifilament textile yarns 22a of the type described above. Similarly, the strand 20b comprises two monofilament textile threads 21b of the type described above and two multifilament textile yarns 22b of the type described above. The empty space in the centre of the hybrid reinforcing cord 10 illustrated in Figure 6 will in reality be occupied by the filaments 23a and 23b of the multifilament textile yarns 22a, 22b.

The strand 20a comprises two ends 20a' twisted together with a twisting pitch which can be equal to, or different from, the twisting pitch of the two strands 20a, 20b. Similarly, the strand 20b comprises two ends 20b' twisted together with a twisting pitch which can be equal to, or different from, the twisting pitch of the two ends 20a'. Each of the two ends 20a' of the strand 20a comprises a monofilament textile thread 21a at least partially embedded in the filaments 23a of a multifilament textile yarn 22a. Similarly, each of the two ends 20b' of the strand 20b comprising a monofilament textile thread 21b at least partially embedded in the filaments 23b of a multifilament textile yarn 22b.

In a preferred embodiment of the hybrid reinforcing cord 10 illustrated in Figure 6, the monofilament textile threads 21a, 21b are made of PET fibres and have a diameter of 0.30 mm, while the multifilament textile yarns 22a, 22b are made of aramid and have a linear density equal to 1110 dtex. In this hybrid reinforcing cord 10, for example, 310 twists in the right direction (Z) were imparted to the ends 20a', 20b' of each strand 20a, and 20b, while 280 twists in the left direction (S) were imparted to each of the two strands the ends 20a', 20b'. The reinforcing cord can therefore be indicated with 2×2 (PET0.30+AR1100) 310Z/280S.

The building of the tyre (100) as described above, can be carried out by assembling respective semi-finished products adapted to form the components of the tyre, on a forming drum, not shown, by at least one assembling device.

At least a part of the components intended to form the carcass structure of the tyre can be built and/or assembled on the forming drum. More specifically, the forming drum is suitable for receiving first liners and underliner, then the sidewall reinforcement inserts and subsequently the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green tyre, a moulding and vulcanisation treatment is generally carried out in order to determine the structural stabilisation of the tyre through cross-linking of the elastomeric compositions, as well as to impart a desired tread pattern on the tread band and at any distinguishing graphic signs at the sidewalls.

The following examples are now provided for merely illustrative and non-limiting purposes.

### EXPERIMENTAL PART

### EVALUATION METHODS

The static mechanical properties (CA1 load at 100% elongation, CR tensile strength, AR% elongation at break) according to the UNI 6065:2001 standard were measured at 23°C on samples of elastomeric materials, vulcanised at 170°C for 10 minutes.

The compressive dynamic mechanical properties E' and Tan delta were measured using an Instron model 1341 dynamic device in the tension-compression mode according to the following methods. A test piece of cross-linked material (170°C for 10 minutes) having a cylindrical shape (length = 25 mm; diameter = 14 mm), preloaded in compression up to a longitudinal strain of 25% with respect to the initial length and maintained at the predetermined temperature (23°C) for the whole duration of the test was subjected to a dynamic sinusoidal strain having an amplitude of ± 3.5% with respect to the length under pre-load, with a frequency of 10 Hz. The dynamic mechanical properties are expressed in terms of dynamic elastic modulus (E') and Tan delta (loss factor). The Tan delta value was calculated as the ratio between the viscous dynamic module (E") and the dynamic elastic modulus (E').

The dynamic mechanical properties of shear and Tan delta dynamic modulus G' were evaluated using an Alpha Technologies P.P.A. 2000 oscillating chamber rheometer (Rubber Process Analyser) with chamber geometry as described in ASTM D6601-19 Figure 1, applying the following method:
1) an approximately cylindrical test sample with a volume in the range from 4.6 to 5 cm³ was obtained by punching a sheet with a thickness of at least 5 mm of the green vulcanisable elastomeric compound to be characterised;
2) the chambers of the RPA apparatus were preliminarily preheated to 170°C;
3) the sample was loaded between the chambers of the RPA apparatus and the chambers were closed. Between the sample of the green vulcanisable elastomeric compound and each chamber of the RPA apparatus, two films were interposed to protect the chamber itself: in contact with the compound, a film of Nylon 6.6 cast of about 25 microns and in contact with the chamber of the RPA apparatus a polyester film of about 23 microns;
4) the sample was then vulcanised for a fixed time of 10 min at a temperature of 170°C while recording the vulcanisation curve, i.e. subjecting the sample to a sinusoidal deformation of 7% amplitude and 1.67 Hz frequency for the entire duration of the vulcanisation;
5) the temperature of the chambers of the RPA apparatus was then brought to 70°C; 10 minutes after the chamber temperature was set at 70°C, a sequence of dynamic measurements was performed at a constant temperature of 70°C by sinusoidally stressing the sample in torsion at a fixed frequency of 10 Hz and amplitude progressively increasing from 0.3% to 10%, carrying out 10 stabilisation cycles and 10 measurement cycles for each condition;
6) again at 70°C, a dynamic measurement was then performed by sinusoidally stressing the sample in torsion at the fixed frequency of 10 Hz and amplitude of 9%, carrying out 10 stabilisation cycles and 20 measurement cycles: the result was expressed as average of what measured in the 20 measurement cycles, as dynamic shear modulus G' and as Tan Delta (ratio between viscous modulus G" and G', Tan Delta = G"/G').

### Rolling Resistance (RR) Assessment

Rolling resistance (RR) measurements were carried out on the sample tyres according to the UNECE reg. 117 Rev.4 annex 6 - ISO 28580:2018 (par. 4b (torque method)) - Notification No. 2011-237 (Korea). The rolling resistance coefficient was expressed in N/kN.

The tyres thus tested were then assigned a relative rolling resistance index equal to the ratio of the rolling resistance measured for the tyre in question with respect to the reference tyre. The lower the value of this index, the lower the rolling resistance of the tyre under test and therefore the better its performance.

The results of the tests carried out are reported in Table 3. In such Table 3, a reduction in value (e.g. from 100 to 92) in the RR results represented improved performance while an increase in value (e.g. from 100 to 104) indicated deterioration.

### Evaluation of the distance travelled in deflation conditions (Run Flat test)

A BMW 5 Series car was equipped with four tyres, reference or invention, depending on the tyre group under consideration (see Example 3, sample tyre preparation P1 - P4).

A flat ride test was performed for each group of tyres by completely deflating the left rear tyre and driving on a mixed route at a travel speed not exceeding 80 km/h until the tyre was evidently damaged.

The test was repeated twice for each tyre group and the results averaged.

In order to compare the performance of the tyres, an "RF" distance index of 100 was assigned to a reference tyre for each group of tyres being compared.

A relative "RF" index was then assigned to the other tyres of the same group, corresponding to the ratio between the distance in flat running conditions measured for the test tyres compared to that of the reference tyre, set at 100, said distances having been measured in close comparison.

The results are shown in Table 3.

In such Table 3, maintaining or moderately decreasing the value (e.g. from 100 to 75) in flat driving results represented comparable or entirely acceptable performance even if slightly worsened. An increase in the value (e.g. from 100 to 120) indicated an improved performance, i.e. a longer distance while a significant decrease in the value (e.g. less than 50) indicated an unacceptable performance.

### Example 1:

### Preparation of elastomeric compounds for sidewall reinforcement insert

The reference compositions and according to the invention reported in the following Table 1 were prepared as elastomeric compositions for the sidewall reinforcement insert:

**TABLE 1**

| Compositions | Reference (R) | Invention (I) |
|---|---|---|
| NR | -- | 80.0 |
| IR | 40.0 | 20.0 |
| BR | 60.0 | --- |
| N-550 | 32.0 | --- |
| SilSep1 | 20.0 | --- |
| SilSep1 | --- | 16.0 |
| Stearic acid | 2.0 | 2.0 |
| Zinc oxide | 4.0 | 4.0 |
| TESPT 50% on CB | 5.0 | 4.0 |
| TMQ | 1.0 | 1.0 |
| 6-PPD | 2.0 | 2.0 |
| TBBS | 2.5 | 1.9 |
| Isobutyl TUADS | 0.5 | 0.3 |
| Sulphur | 2.3 | 3.6 |
| Total Phr | 171.3 | 134.8 |
| Total filler (%) | 32% | 13% |

| | | |
|---|---|---|
| NR: natural rubber (Standard Thai Rubber STR 20 - Thaiteck Rubber); IR: synthetic polyisoprene: (SKI-3 Nizhnekamskneftekhim); BR: polybutadiene (Europrene Neocis^{®} - Polymers Europe); TESPT 50% on CB: Mixture of Bis(triethoxysilylpropyl)tetrasulphide (TESPT 50%) supported on carbon black (50%), produced by Evonik Industries AG, Germany; N550: carbon black (N550 Birla Carbon); Silica: ZEOSIL 1115 HP (Solvay); SilSep1: white filler in microbeads M2 prepared according to Example 1 of patent application WO2019106562A1; SilSep2: white filler in microbeads M6 prepared according to Example 3 of patent application WO2019106562A1; Stearic acid: STEARINA N (SOGIS) Zinc oxide: Rhenogran^{®} ZnO-80 (RheinChemie); TMQ (anti-ageing): Polymerised NAUGARD Q (CHEMTURA CORPORATION); 6-PPD (antioxidant): N-(1,3-dimethylbutyl)-N'-phenyl-p-phenylene-diamine (SantoflexTM 6PPD - Eastman); TBBS (accelerant): N-tert-butyl-2-benzothiazylsulphenamide (Vulkacit^{®} NZ/EGC - Lanxess); Isobutil TUADS (Isobutylthiuram disulphide) accelerant produced by RTVanderbilt; Sulphur (vulcaniser): insoluble 67%, Solfotecnica. | | |

Starting from the elastomeric compositions shown in Table 1, the corresponding elastomeric compounds were prepared according to the following process.

The mixing of the components was carried out in two steps using an internal mixer

### (Banbury, Intermix or Brabender)

In the first step (1), all the ingredients were introduced with the exception of vulcanisers and accelerants. The mixing was continued for a maximum time of 5 minutes, reaching a temperature of approximately 145°C. Subsequently, in the second test (2), again carried out using an internal mixer, the vulcanisers and accelerants were added, and the mixing was continued for about 4 minutes while maintaining the temperature below 100°C. The compounds were then unloaded. After cooling and at least 12 hours from preparation, some samples of the compounds were vulcanised in a press at 170°C for 10 min to give the specimens useful for mechanical characterisations.

### Example 2:

### Characterisation of the compounds

The main static and dynamic properties of the aforementioned elastomeric compounds, measured by the methods described above, are shown in the following Table 2

**TABLE 2**

| | Reference compound (R) | Invention compound (I) |
|---|---|---|
| Dynamic mechanical properties | | |
| E' 23°C 10 Hz | 9.32 | 4.68 |
| Tanδ 23°C 10 Hz | 0.072 | 0.036 |
| G' 70°C 10 Hz (RPA) | 1.81 | 0.74 |
| Tanδ 70°C 10 Hz (RPA) | 0.090 | 0.049 |
| Static mechanical properties | | |
| CA1 (MPa) | 5.14 | 3.39 |
| CR (MPa) | 12.3 | 8.30 |
| AR% | 244 | 275 |

By comparing the mechanical properties of the compound used in the invention (I) with those of the compound used in the reference sidewall reinforcement insert (R), it is observed that the compound (I) shows a Tanδ value at 23°C and 70°C extremely low, predictive of low rolling resistance and reduced fuel consumption.

The compound (I) also shows dynamic mechanical properties, in particular the dynamic shear modulus (G') and the dynamic compression modulus (E'), particularly low compared to the compound (R), indicative of a lower rigidity of the sidewall reinforcement insert.

### Example 3:

### Preparation of sample tyres

In order to evaluate the performance of tyres with sidewall reinforcement inserts according to the present invention with respect to reference tyres, in terms of rolling resistance and maximum mileage in run flat conditions, sets of tyres were prepared having the features shown below.

Each tire comprised a carcass structure comprising a carcass ply and two sidewall reinforcement inserts, axially internal to each of the sidewalls, as shown in Figure 1, said two sidewall reinforcement inserts having identical composition, same thickness and same shape.

In each set, tyres were compared under the same operating conditions, modified only in terms of carcass structure and/or elastomeric compound of the sidewall reinforcement inserts and/or their thickness, all other features of the sidewall reinforcement inserts and tyres being equal.

The sample tires included the Applicant's self-supporting RunFlat tires in size 245/45 R18 100Y XL configured as follows:
- commercial self-supporting tire comprising carcass structure comprising non-hybrid reinforcing cords, as described below, and sidewall reinforcement inserts having a thickness of 7 mm consisting of the reference elastomeric compound, hereinafter reference tyre P1;
- self-supporting tire like P1 but comprising sidewall reinforcement inserts with a thickness of 6.5 mm consisting of the reference elastomeric compound, hereinafter comparative tire P2;
- self-supporting tire like P2 but comprising carcass structure comprising hybrid reinforcing cords, as described below, hereinafter comparison tire P3; and
- self-supporting tyre like P3 but comprising sidewall reinforcement inserts with a thickness of 8 mm made up of the elastomeric compound of the invention, hereinafter invention tyre P4.

The non-hybrid reinforcing cords of the carcass structure of the tyres P1 and P2 were of the type RY1840×2 (48Z×48S), i.e. they each comprised two multifilament rayon textile yarns twisted together, in which each multifilament textile yarn was imparted 48 right-handed twists (Z) and 48 twists in left-hand direction (S) were imparted to the reinforcing cord. These reinforcing cords were arranged in the carcass structure with a thread count equal to 120 cords/dm.

The hybrid reinforcing cords of the carcass structure of the tyres P3 and P4 were of the following type: (PET0.30+AR1680)×2 310Z/180S, i.e. they each comprised two strands, each strand comprising two PET monofilament textile threads having a diameter of 0.30 mm and an aramid multifilament textile yarn having a linear density of 1680 dtex. The two strands were twisted together by imparting 310 twists in the right direction (Z), while each multifilament textile yarn was twisted to the respective monofilament textile thread imparting 180 twists in the left direction (S). These hybrid reinforcing cords were arranged in the carcass structure with a thread count equal to 85 cords/dm.

### Example 4

### Characterisation of tires

The main features of the self-supporting tyres P1-P4 and their rolling resistance and maximum mileage performance in run flat conditions, evaluated according to the methods described above, are shown in the following Table 3:

**TABLE 3**

| Tyre | Reference P1 | Comparison P2 | Comparison P3 | Invention P4 |
|---|---|---|---|---|
| Compound IRF | Reference | Reference | Reference | Invention |
| Carcass cords | Non-hybrid | Non-hybrid | Hybrid | Hybrid |
| Relative IRF thickness | 100 | 93 | 93 | 114 |
| Relative RR | 100 | 97 | 98 | 95 |
| Relative RF | 100 | 27 | 83 | 102 |

| | | | | |
|---|---|---|---|---|
| IRF = sidewall reinforcement inserts; Relative IRF thickness = thickness normalising the value of the reference tire P1 to 100; RR = absolute and relative rolling resistance by normalising the value of the reference tyre P1 to 100; RF = maximum distance in flat run conditions, absolute and relative driving conditions by normalising the value of the reference tire P1 to 100. | | | | |

By comparing the performance of the comparison tire P2 with that of the reference tire P1 it is observed that even a modest reduction in the thickness of the sidewall reinforcement insert leads to a drastic reduction in the distance travelled in run flat conditions, although a moderate benefit is obtained in terms of rolling resistance. By comparing the performance of the comparison tire P3 with that of the comparison tire P2, it is observed that the use of a carcass ply including the hybrid cords allows to recover a large part of the distance travelled in run flat conditions, without excessively penalising the rolling resistance, however better than the value of the reference tire P1.

Finally, by comparing the performance of the tire of the invention P4 with that of the reference tire P1 and comparison tire P2 and P3, it can be observed that all the distance lost by the tires P2 and P3 has been recovered, obtaining an even better result than that obtained with the tire P1, and that at the same time a significantly lower value of rolling resistance was obtained, despite the use of a slightly greater thickness of the sidewall reinforcement insert.

In conclusion, from the above tests it was found that by reducing the rigidity of the sidewall reinforcement inserts of self-supporting tires in the presence of a carcass structure made with hybrid cords according to the invention it was possible to achieve an overall advantageous result, with an appreciable improvement in terms of mileage in run flat conditions, but above all surprisingly improved in rolling resistance compared to self-supporting tires of the prior art.

### Example 5

### Tire performance

In a second series of tests, aimed at evaluating the performance of the tire of the present invention, the Applicant compared a reference tire P1b of the type 215/45 R17 91Y XL, RunFlat made by the Applicant, having a carcass structure and a sidewall reinforcement insert as described for the tire P1, with a tire of the invention P4b similar to the tire P1b, but having a carcass structure and a sidewall reinforcement insert as described for the tyre P4.

The reference tire P1b is a tire appreciated by customers for its excellent behaviour on dry and wet road surfaces in terms of driveability and braking.

The tyres P1b and P4b were mounted on a Mini Cooper S, inflated to 2.6 bar at the front and 2.2 bar at the rear and submitted to the evaluation of an evaluator who made a series of laps of a circuit.

The rating given by the evaluator is shown in Table 4 below, where the symbol "=" indicates an excellent rating and the symbol "+" indicates an improvement compared to the reference tires.

**TABLE 4**

| Tyre | Reference P1b | Invention P4b |
|---|---|---|
| Straight drive on uneven surface | = | + |
| Straight drive on smooth surface | = | + |
| Steering response | = | + |
| Steering torque | = | + |
| Steering angle required | = | + |
| Change of direction | = | + |
| Comfort | = | + |
| Rolling noise | = | + |
| Insertion | = | + |
| Understeer | = | + |
| Oversteer | = | + |
| Release | = | + |
| Progressive loss of grip | = | + |
| Recovery | = | + |
| Controllability | = | + |
| Lateral seal | = | + |

Table 4 shows that the tire of the invention gave improved results with respect to the already excellent results of the reference tire in all performance items.

The present invention has been described with reference to some preferred embodiments. Various modifications may be made to the embodiments described above, while remaining within the scope of protection of the invention, defined by the following claims.

## Claims

1. A self-supporting tire (100) for vehicle wheels comprising
• a carcass structure (101) comprising at least one carcass ply (111) having opposing side edges associated with respective bead structures (103);
• a belt structure (106) applied in a radially external position with respect to said carcass structure (101);
• a tread band (109) applied in a radially external position with respect to said belt structure (106);
• a pair of sidewalls (108) respectively applied in an axially external position on the side surfaces of said carcass structure (101);
• a layer of air-impermeable elastomeric material, known as a liner (112), extending at least in correspondence with said tread band (109) in a radially internal position with respect to said carcass structure (101); and
• a pair of sidewall reinforcement inserts (113), respectively embedded in correspondence with said pair of sidewalls (108) in an axially internal position with respect to said pair of sidewalls (108),
**characterised in that**
• said carcass ply (111) comprises a plurality of hybrid reinforcing cords (10), each cords having at least two strands (20) corded to each other with a predetermined twisting pitch (P), wherein each of said at least two strands (20) comprises:
∘ at least one monofilament textile thread (21);
∘ at least one multifilament textile yarn (22) comprising a plurality of textile filaments (22a);
wherein, in any cross-section of the hybrid reinforcing cord (10), said at least one monofilament textile thread (21) is at least partially embedded in the filaments (22a) of said at least one multifilament textile yarn (22), and
• at least one sidewall reinforcement insert of said pair of sidewall reinforcement inserts (113) comprises a vulcanised elastomeric compound having a value of elastic dynamic shear modulus G' equal to or lower than 1.25 MPa measured at 70°C, 10 Hz, 9% strain according to the RPA method set forth in the present description.

2. Self-supporting tire (100) for vehicle wheels according to claim 1, wherein said vulcanised elastomeric compound is obtained by mixing and vulcanising a vulcanisable elastomeric composition comprising
• 100 phr of at least one diene elastomeric polymer,
• at least one reinforcing filler in a total amount of less than 30% by weight relative to the total weight of said vulcanisable elastomeric composition, and
• at least 0.1 phr of at least one vulcanising agent.

3. Self-supporting tire (100) for vehicle wheels according to claim 1, wherein said at least one sidewall reinforcement insert of said pair of sidewall reinforcement inserts (113) comprises a vulcanised elastomeric compound having a value of elastic dynamic shear modulus G' ranging from 0.50 MPa to 1.25 MPa measured at 70°C, 10 Hz, 9% deformation according to the RPA method set forth in the present description.

4. Self-supporting tire (100) for vehicle wheels according to claim 1, wherein said vulcanised elastomeric compound has a value of elastic dynamic shear modulus G' ranging from 0.55 to 1.20 MPa, preferably ranging from 0.60 to 1.10 MPa, more preferably ranging from 0.65 to 1.05 MPa measured at 70°C, 10 Hz, 9% deformation according to the RPA method given in the present description.

5. Self-supporting tire (100) for vehicle wheels according to claim 1, wherein said vulcanised elastomeric compound has a value of elastic dynamic compression modulus E' ranging from 2.50 to 7.50 MPa, preferably ranging from 3.50 to 6.50 MPa, more preferably ranging from 4.00 to 6.00 MPa measured at 70°C, 10 Hz, 9% deformation according to the RPA method given in the present description.

6. Self-supporting tire (100) for vehicle wheels according to claim 1, wherein said vulcanised elastomeric compound has a Tan Delta value ranging from 0.030 to 0.080, preferably ranging from 0.035 to 0.072, more preferably ranging from 0.040 to 0.060 measured at 70°C, 10 Hz according to the RPA method given in the present description.

7. Self-supporting tire (100) for vehicle wheels according to any one of claims 1 to 6, wherein said vulcanised elastomeric compound is comprised in both sidewall reinforcement inserts of said pair of sidewall reinforcement inserts (113).

8. Self-supporting tire (100) for vehicle wheels according to claim 1, wherein said sidewall reinforcement inserts (113) have a maximum axial extension ranging from 3 mm to 14 mm, preferably from 5 mm to 12 mm, more preferably from 7 mm to 10 mm, measured in a direction perpendicular to the plane tangent to the external surface of each sidewall reinforcement insert (113).

9. Self-supporting tire (100) for vehicle wheels according to claim 2, wherein said at least one reinforcing filler is selected from the group consisting of carbon black, silica, modified silica, silicates, modified silicates, silicate fibres, modified silicate fibres, and mixtures thereof.

10. Self-supporting tire (100) for vehicle wheels according to claim 9, wherein said silicate fibres are selected from the group consisting of sepiolite fibres, paligorskite fibres (also known as attapulgite), wollastonite fibres, imogolite fibres, and mixtures thereof.

11. Self-supporting tire (100) for vehicle wheels according to claim 9, wherein said modified silicate fibres are selected from the group consisting of fibres modified by acid treatment with partial magnesium removal, fibres modified by deposition of amorphous silica on the surface, fibres organically modified by reaction with quaternary ammonium salts, fibres modified by reaction with a silanising agent, and mixtures thereof.

12. Self-supporting tire (100) for vehicle wheels according to claim 2, wherein said vulcanisable elastomeric composition comprises said at least one reinforcing filler in a total amount ranging from 5% to 30%, preferably from 5% to 26%, and more preferably from 10% to 20% by weight relative to the total weight of said vulcanisable elastomeric composition.

13. Self-supporting tire (100) according to claim 1, wherein in any cross-section of at least one segment of the hybrid reinforcing cord (10), said at least one monofilament textile thread (21a, 21b) is completely embedded in the filaments (23a, 23b) of said at least one multifilament textile yarn (22a, 22b).

14. Self-supporting tire (100) according to claim 1, wherein said at least one monofilament textile thread (21a, 21b) has a diameter ranging from 0.15 mm to 0.50 mm, preferably from 0.20 mm to 0.40 mm.

15. Self-supporting tire (100) according to claim 1, wherein said at least one multifilament textile yarn (22a, 22b) has a linear density ranging from 400 dtex to 4000 dTex, preferably from 800 dtex to 2500 dtex more preferably from 840 dtex to 2100 dtex.

16. Self-supporting tire (100) according to claim 1, wherein said at least one carcass ply (111) has a thread count ranging from 70 cords/dm to 95 cords/dm, preferably from 75 cords/dm to 90 cords/dm.

17. Self-supporting tire (100) according to claim 1, wherein said at least one carcass ply (111) has a thickness ranging from 0.7 mm to 1.5 mm, preferably from 0.9 mm to 1.3 mm.

18. Self-supporting tire (100) according to claim 1, wherein said carcass structure (101) comprises a single carcass ply (111).

## Patentansprüche

1. Selbsttragender Reifen (100) für Fahrzeugräder, umfassend
- eine Karkassenstruktur (101) umfassend mindestens eine Karkassenanlage (111), die gegenüberliegende Seitenränder aufweist, die jeweiligen Wulststrukturen (103) zugeordnet sind;
- eine Gürtelstruktur (106), die in einer radial äußeren Position in Bezug auf die Karkassenstruktur (101) angebracht ist;
- ein Laufflächenband (109), das in einer radial äußeren Position in Bezug auf die Gürtelstruktur (106) angebracht ist,
- ein Paar Seitenwände (108), die jeweils in einer axial äußeren Position auf den Seitenflächen der Karkassenstruktur (101) angebracht sind;
- eine Schicht aus luftundurchlässigem Elastomermaterial, als Einlage (112) bezeichnet, die sich zumindest in Übereinstimmung mit dem Laufflächenband (109) in einer radial inneren Position in Bezug auf die Karkassenstruktur (101) erstreckt; und
- ein Paar Seitenwandverstärkungseinsätze (113), die jeweils in Übereinstimmung mit dem Paar Seitenwände (108) in einer axial inneren Position in Bezug auf das Paar Seitenwände (108) eingebettet sind, **dadurch gekennzeichnet, dass**
die Karkassenanlage (111) eine Vielzahl hybrider Verstärkungsschnüre (10) umfasst, wobei jede Schnur mindestens zwei Stränge (20) aufweist, die mit einem vorbestimmten Verdrillungsschritt (P) miteinander verdrillt sind, wobei jeder der mindestens zwei Stränge (20) Folgendes umfasst:
- mindestens einen Monofilament-Textilfaden (21);
- und mindestens ein Multifilament-Textilgarn (22), das eine Vielzahl von Textilfilamenten (22a) umfasst;
wobei in einem beliebigen Querschnitt der hybriden Verstärkungsschnur (10) der mindestens eine Monofilament-Textilfaden (21) zumindest teilweise in die Filamente (22a) des mindestens einen Multifilament-Textilgarns (22) eingebettet ist, und
- mindestens ein Seitenwandverstärkungseinsatz des Paars Seitenwandverstärkungseinsätze (113) eine vulkanisierte Elastomermischung mit einem elastischen dynamischen Schermodul G' gleich oder kleiner 1,25 MPa, gemessen bei 70°C, 10 Hz, 9% Spannung gemäß dem RPA-Verfahren, das in der vorliegenden Beschreibung angegeben ist, umfasst.

2. Selbsttragender Reifen (100) für Fahrzeugräder nach Anspruch 1, wobei die vulkanisierte Elastomermischung durch Mischen und Vulkanisieren einer vulkanisierbaren Elastomerzusammensetzung erhalten wird, umfassend
100 phr mindestens eines elastomeren Dienpolymers,
- mindestens einen verstärkenden Füllstoff in einer Gesamtmenge von weniger als 30 Gew.-%, bezogen auf das Gesamtgewicht der vulkanisierbaren Elastomerzusammensetzung, und
zumindest 0,1 phr mindestens eines Vulkanisationsmittels.

3. Selbsttragender Reifen (100) für Fahrzeugräder nach Anspruch 1, wobei der mindestens eine Seitenwandverstärkungseinsatz des Paars Seitenwandverstärkungseinsätze (113) eine vulkanisierte Elastomermischung mit einem elastischen dynamischen Schermodul G' im Bereich von 0,50 MPa bis 1,25 MPa, gemessen bei 70°C, 10 Hz, 9% Verformung gemäß dem RPA-Verfahren, das in der vorliegenden Beschreibung angegeben ist, umfasst.

4. Selbsttragender Reifen (100) für Fahrzeugräder nach Anspruch 1, wobei die vulkanisierte Elastomermischung einen Wert des elastischen dynamischen Schermoduls G' im Bereich von 0,55 bis 1,20 MPa, vorzugsweise im Bereich von 0,60 bis 1,10 MPa, bevorzugter im Bereich von 0,65 bis 1,05 MPa, gemessen bei 70°C, 10 Hz, 9% Verformung gemäß dem RPA-Verfahren, das in der vorliegenden Beschreibung angegeben ist, aufweist.

5. Selbsttragender Reifen (100) für Fahrzeugräder nach Anspruch 1, wobei die vulkanisierte Elastomermischung einen Wert des elastischen dynamischen Kompressionsmoduls E' im Bereich von 2,50 bis 7,50 MPa, vorzugsweise im Bereich von 3,50 bis 6,50 MPa, bevorzugter im Bereich von 4,00 bis 6,00 MPa, gemessen bei 70°C, 10 Hz, 9% Verformung gemäß dem RPA-Verfahren, das in der vorliegenden Beschreibung angegeben ist, aufweist.

6. Selbsttragender Reifen (100) für Fahrzeugräder nach Anspruch 1, wobei die vulkanisierte Elastomermischung einen Tan Delta-Wert im Bereich von 0,030 bis 0,080, vorzugsweise im Bereich von 0,035 bis 0,072, bevorzugter im Bereich von 0,040 bis 0,060, gemessen bei 70°C, 10 Hz gemäß dem RPA-Verfahren, das in der vorliegenden Beschreibung angegeben ist, aufweist.

7. Selbsttragender Reifen (100) für Fahrzeugräder nach einem der Ansprüche 1 bis 6, wobei die vulkanisierte Elastomermischung in beiden Seitenwandverstärkungseinsätzen des Paars Seitenwandverstärkungseinsätze (113) enthalten ist.

8. Selbsttragender Reifen (100) für Fahrzeugräder nach Anspruch 1, wobei die Seitenwandverstärkungseinsätze (113) eine maximale axiale Ausdehnung im Bereich von 3 mm bis 14 mm, vorzugsweise von 5 mm bis 12 mm, bevorzugter von 7 mm bis 10 mm aufweisen, gemessen in einer Richtung senkrecht zur Ebene, die die Außenfläche jedes Seitenwandverstärkungseinsatzes (113) tangiert.

9. Selbsttragender Reifen (100) für Fahrzeugräder nach Anspruch 2, wobei der mindestens eine verstärkende Füllstoff aus der Gruppe ausgewählt ist, die aus Ruß, Kieselsäure, modifizierter Kieselsäure, Silikaten, modifizierten Silikaten, Silikatfasern, modifizierten Silikatfasern und Mischungen davon besteht.

10. Selbsttragender Reifen (100) für Fahrzeugräder nach Anspruch 9, wobei die Silikatfasern aus der Gruppe ausgewählt sind, die aus Sepiolithfasern, Paligorskitfasern (auch als Attapulgit bekannt), Wollastonitfasern, Imogolitfasern und Mischungen davon besteht.

11. Selbsttragender Reifen (100) für Fahrzeugräder nach Anspruch 9, wobei die modifizierten Silikatfasern aus der Gruppe ausgewählt sind, die aus durch Säurebehandlung mit teilweiser Magnesiumentfernung modifizierten Fasern, durch Ablagerung von amorpher Kieselsäure auf der Oberfläche modifizierten Fasern, durch Reaktion mit quaternären Ammoniumsalzen organisch modifizierten Fasern, durch Reaktion mit einem Silanisierungsmittel modifizierten Fasern und Mischungen davon besteht.

12. Selbsttragender Reifen (100) für Fahrzeugräder nach Anspruch 2, wobei die vulkanisierbare Elastomerzusammensetzung mindestens einen verstärkenden Füllstoff in einer Gesamtmenge im Bereich von 5% bis 30%, vorzugsweise von 5% bis 26%, und bevorzugter 10 bis 20 Gew-%, bezogen auf das Gesamtgewicht der vulkanisierbaren Elastomerzusammensetzung umfasst.

13. Selbsttragender Reifen (100) nach Anspruch 1, wobei in einem beliebigen Querschnitt mindestens eines Segments der hybriden Verstärkungsschnur (10) der mindestens eine Monofilament-Textilfaden (21a, 21b) vollständig in die Filamente (23a, 231b) des mindestens einen Multifilament-Textilgarns (22a, 22b) eingebettet ist.

14. Selbsttragender Reifen (100) nach Anspruch 1, wobei der mindestens eine Monofilament-Textilfaden (21a, 21b) einen Durchmesser im Bereich von 0,15 mm bis 0,50 mm, vorzugsweise von 0,20 mm bis 0,40 mm aufweist.

15. Selbsttragender Reifen (100) nach Anspruch 1, wobei das mindestens eine Multifilament-Textilgarn (22a, 22b) eine lineare Dichte im Bereich von 400 dTex bis 4000 dTex, vorzugsweise von 800 dTex bis 2500 dTex, bevorzugter von 840 dtex bis 2100 dtex aufweist.

16. Selbsttragender Reifen (100) nach Anspruch 1, wobei die mindestens eine Karkasseanlage (111) eine Fadendichte im Bereich von 70 Schnüre/dm bis 95 Schnüre/dm, vorzugsweise von 75 Schnüre/dm bis 90 Schnüre/dm aufweist.

17. Selbsttragender Reifen (100) nach Anspruch 1, wobei die mindestens eine Karkassenanlage (111) eine Dicke im Bereich von 0,7 mm bis 1,5 mm, vorzugsweise von 0,9 mm bis 1,3 mm aufweist.

18. Selbsttragender Reifen (100) nach Anspruch 1, wobei die Karkassenstruktur (101) eine einzige Karkassenanlage (111) umfasst.

## Revendications

1. Pneu autoportant (100) pour roues de véhicule comprenant
- une structure de carcasse (101), comprenant au moins un pli de carcasse (111) présentant des bords latéraux opposés associés à des structures de talon respectives (103) ;
- une structure de ceinture (106) appliquée dans une position radialement externe par rapport à ladite structure de carcasse (101) ;
- une bande de roulement (109) appliquée dans une position radialement externe par rapport à ladite structure de ceinture (106) ;
- une paire de flancs (108) respectivement appliqués dans une position axialement externe sur les surfaces latérales de ladite structure de carcasse (101) ;
- une couche de matériau élastomère imperméable à l'air, connue sous le nom de revêtement (112), s'étendant au moins en correspondance avec ladite bande de roulement (109) dans une position radialement interne par rapport à ladite structure de carcasse (101) ; et
- une paire d'inserts de renfort de flancs (113), respectivement intégrés en correspondance avec ladite paire de flancs (108) dans une position axialement interne par rapport à ladite paire de flancs (108), **caractérisé en ce que**
ledit pli de carcasse (111) comprend une pluralité de cordons de renfort hybride (10), chaque cordon présentant au moins deux brins (20) torsadés ensemble avec un pas de torsion prédéterminé (P), dans lequel chacun desdits au moins deux brins (20) comprend :
- au moins un fil textile monofilament (21) ;
- au moins un fil textile multifilament (22) comprenant une pluralité de filaments textiles (22a) ;
dans lequel, dans n'importe quelle section transversale du cordon de renfort hybride (10), ledit au moins un fil textile monofilament (21) est au moins partiellement intégré dans les filaments (22a) dudit au moins un fil textile multifilament (22), et
- au moins un insert de renfort de flancs de ladite paire d'inserts de renfort de flancs (113) comprend un composé élastomère vulcanisé présentant une valeur de module de cisaillement dynamique élastique G' égale ou inférieure à 1,25 MPa mesurée à 70 °C, 10 Hz, 9 % de déformation selon la méthode RPA exposée dans la présente description.

2. Pneu autoportant (100) pour roues de véhicule selon la revendication 1, dans lequel ledit composé élastomère vulcanisé est obtenu par mélange et vulcanisation d'une composition élastomère vulcanisable comprenant
- 100 phr d'au moins un polymère élastomère diénique,
- au moins une charge renforçante en une quantité totale inférieure à 30 % en poids par rapport au poids total de ladite composition élastomère vulcanisable, et
- au moins 0,1 phr d'au moins un agent de vulcanisation.

3. Pneu autoportant (100) pour roues de véhicule selon la revendication 1, dans lequel ledit au moins un insert de renfort de flancs de ladite paire d'inserts de renfort de flancs (113) comprend un composé élastomère vulcanisé présentant une valeur de module de cisaillement dynamique élastique G' dans la plage de 0,50 MPa à 1,25 MPa mesurée à 70 °C, 10 Hz, 9 % de déformation selon la méthode RPA exposée dans la présente description.

4. Pneu autoportant (100) pour roues de véhicule selon la revendication 1, dans lequel ledit composé élastomère vulcanisé présente une valeur de module de cisaillement dynamique élastique G' dans la plage de 0,55 à 1,20 MPa, de préférence dans la plage de 0,60 à 1,10 MPa, plus préférentiellement dans la plage de 0,65 à 1,05 MPa mesurée à 70 °C, 10 Hz, 9 % de déformation selon la méthode RPA donnée dans la présente description.

5. Pneu autoportant (100) pour roues de véhicule selon la revendication 1, dans lequel ledit composé élastomère vulcanisé présente une valeur de module de compression dynamique élastique E' dans la plage de 2,50 à 7,50 MPa, de préférence dans la plage de 3,50 à 6,50 MPa, plus préférentiellement dans la plage de 4,00 à 6,00 MPa mesurée à 70 °C, 10 Hz, 9 % de déformation selon la méthode RPA donnée dans la présente description.

6. Pneu autoportant (100) pour roues de véhicule selon la revendication 1, dans lequel ledit composé élastomère vulcanisé présente une valeurTan Delta dans la plage de 0,030 à 0,080, de préférence dans la plage de 0,035 à 0,072, plus préférentiellement dans la plage de 0,040 à 0,060 mesurée à 70 °C, 10 Hz selon la méthode RPA donnée dans la présente description.

7. Pneu autoportant (100) pour roues de véhicule selon l'une quelconque des revendications 1 à 6, dans lequel ledit composé élastomère vulcanisé est compris dans les deux inserts de renfort de flancs de ladite paire d'inserts de renfort de flancs (113).

8. Pneu autoportant (100) pour roues de véhicule selon la revendication 1, dans lequel lesdits inserts de renfort de flancs (113) présentent une extension axiale maximale dans la plage de 3 mm à 14 mm, de préférence de 5 mm à 12 mm, plus préférentiellement de 7 mm à 10 mm, mesurée dans une direction perpendiculaire au plan tangent à la surface externe de chaque insert de renfort de flancs (113).

9. Pneu autoportant (100) pour roues de véhicule selon la revendication 2, dans lequel ladite au moins une charge renforçante est choisie dans le groupe consistant en le noir de carbone, la silice, la silice modifiée, les silicates, les silicates modifiés, les fibres de silicate, les fibres de silicate modifiées et des mélanges de ceux-ci.

10. Pneu autoportant (100) pour roues de véhicule selon la revendication 9, dans lequel lesdites fibres de silicate sont choisies dans le groupe consistant en les fibres de sépiolite, les fibres de paligorskite (également appelées attapulgite), les fibres de wollastonite, les fibres d'imogolite et des mélanges de celles-ci.

11. Pneu autoportant (100) pour roues de véhicule selon la revendication 9, dans lequel lesdites fibres de silicate modifiées sont choisies dans le groupe consistant en des fibres modifiées par traitement acide avec élimination partielle du magnésium, des fibres modifiées par dépôt de silice amorphe sur la surface, des fibres modifiées organiquement par réaction avec des sels d'ammonium quaternaire, des fibres modifiées par réaction avec un agent de silanisation, et des mélanges de celles-ci.

12. Pneu autoportant (100) pour roues de véhicule selon la revendication 2, dans lequel ladite composition élastomère vulcanisable comprend ladite au moins une charge renforçante dans une quantité totale dans la plage de 5 % à 30 %, de préférence de 5 % à 26 %, et plus préférentiellement de 10 % à 20 % en poids par rapport au poids total de ladite composition élastomère vulcanisable.

13. Pneu autoportant (100) selon la revendication 1, dans lequel dans toute section transversale d'au moins un segment du cordon de renfort hybride (10), ledit au moins un fil textile monofilament (21a, 21b) est complètement incorporé dans les filaments (23a, 231b) dudit au moins un fil textile multifilament (22a, 22b).

14. Pneu autoportant (100) selon la revendication 1, dans lequel ledit au moins un fil textile monofilament (21a, 21b) présente un diamètre dans la plage de 0,15 mm à 0,50 mm, de préférence de 0,20 mm à 0,40 mm.

15. Pneu autoportant (100) selon la revendication 1, dans lequel ledit au moins un fil textile multifilament (22a, 22b) présente une masse linéique dans la plage de 400 dTex à 4 000 dTex, de préférence de 800 dTex à 2 500 dTex, plus préférentiellement de 840 dtex à 2 100 dtex.

16. Pneu autoportant (100) selon la revendication 1, dans lequel ledit au moins un pli de carcasse (111) présente un nombre de fils dans la plage de 70 cordons/dm à 95 cordons/dm, de préférence de 75 cordons/dm à 90 cordons/dm.

17. Pneu autoportant (100) selon la revendication 1, dans lequel ledit au moins un pli de carcasse (111) présente une épaisseur dans la plage de 0,7 mm à 1,5 mm, de préférence de 0,9 mm à 1,3 mm.

18. Pneu autoportant (100) selon la revendication 1, dans lequel ladite structure de carcasse (101) comprend un seul pli de carcasse (111).
